# EUROPEAN PATENT SPECIFICATION

(11) **EP 1 457 080 B1**
(45) Date of publication and mention of the grant of the patent: **17.02.2010**
(21) Application number: 02790581.9
(22) Date of filing: 17.12.2002
(51) Int. Cl.: H04W 36/14, H04W 36/36

(54) **INTERSYSTEM HANDOVER OF A MOBILE TERMINAL**
WEITERREICHUNG ZWISCHEN SYSTEMEN EINES MOBILEN ENDGERÄTS
TRANSFERT INTERSYSTEME D'UN TERMINAL MOBILE

(30) Priority: 18.12.2001 US 24121
(43) Date of publication of application: 15.09.2004
(73) Proprietor: Nokia Corporation, 02150 Espoo (FI)
(72) Inventor: SÖDERBACKA, Lauri, FIN-02100 Espoo (FI); VIRTANEN, Jarmo, FIN-00330 Helsinki (FI); KAURANEN, Kari, FIN-00510 Helsinki (FI); HIETALAHTI, Hannu, FIN-90810 Kiviniemi (FI); LIUKKONEN, Jari, FIN-33720 Tampere (FI); PITKÄMÄKI, Antti, FIN-33720 Tampere (FI); KALLIO, Juha, FIN-00870 Helsinki (FI)
(74) Representative: Cohausz & Florack
(86) International application number: PCT/IB2002/005432
(87) International publication number: WO 2003/053091

(56) References cited:
- EP-A- 1 024 676
- WO-A-01/31963
- GB-A- 2 322 051
- GB-A- 2 352 586

## Description

### FIELD OF THE INVENTION

The invention relates to a method for performing an intersystem handover of a mobile terminal accessing a communication network via a radio access network of a first type. The communication network comprises radio access networks of this first type and radio access networks of a second type. The invention equally relates to a corresponding mobile terminal, to a corresponding communication network and to a corresponding communication system. Further, the invention relates to a network element of a communication network and to a web switch connecting a communication network and a content server.

### BACKGROUND OF THE INVENTION

It is known from the state of the art to support in a communication system providing different radio access technologies (RAT) an intersystem handover of a mobile terminal between these technologies. Such a handover may be performed for instance between a 3G (3rd generation) radio access network and a 2G (2nd generation) radio access network, or within a 3G system between an UTRAN (universal mobile telecommunication services terrestrial radio access network) employing WCDMA (wideband code division multiple access) and a GSM (global system for mobile communications) radio access network. As a precondition for an intersystem handover, the mobile terminal has to be able to access the communication system via all concerned types of radio access networks. Such mobile terminals are referred to as multi-mode terminals. One example for a multi-mode terminal is a 2G/3G dual-mode terminal.

The network signaling employed for performing an intersystem handover between UMTS (universal mobile telecommunication services) and GMS is described for example in the technical specification 3GPP TS 23.060 V3.6.0 (2001-01): "General Packet Radio Service (GPRS) ; Service description; Stage 2 (Release 1999)".

There are several reasons for which a change of the radio access technology is enabled.

The most important reason for an intersystem handover is differences of coverage and quality in the communication system. In some situations, the coverage of a first radio access system to which a moving mobile terminal is currently connected may end. Moreover, the radio connection quality provided by this first radio access system may degrade below a given threshold value. If at the same time, another radio access system still provides coverage and/or a better radio connection quality, an intersystem handover can guarantee a continued and satisfactory supply of the mobile terminal. The first radio access system is typically a WCDMA system and the second radio access system a GSM/GPRS system.

Another essential reason for an intersystem handover is load, i.e. the current amount of traffic in different radio access systems. When the load in a first radio access system exceeds a pre-defined threshold value, an overflow of mobile terminals can be handed over to another radio access system. In this case, the first radio access system is typically GSM/GPRS and the second radio access system WCDMA.

A third reason for an intersystem handover is QoS (quality of service) requirements of requested services. The operator of the communication system defines service based handover criteria according to its preferences. These criteria are then stored in a service priority table in the core network, which initiates the handover. The same table resides additionally in the radio network controller (RNC) of an UTRAN of the communication system. The table in the RNC can be used in case the RNC receives no handover information from the core network. In an exemplary assignment of services to different radio access technologies, GSM may be preferred for speech and WCDMA for packet data, while circuit data has to be transmitted using WCDMA. An additional criterion for a service based handover is load, load and service based handover thus being a more accurate term than service based handover.

As specified for example in the technical specification 3GPP TS 25.413 V3.4.0 (2000-12): "UTRAN Iu Interface RANAP Signalling (Release 1999)", a service based handover from a 3G UTRAN to a 2G GSM radio access network is implemented by an optional parameter called "Service Handover" in the RANAP (radio access network application part) messages "RAB Assignment Request" and "Relocation Request" on the Iu interface between the core network and an UTRAN. Three values are defined for this parameter, "HO to GSM should be performed", "HO to GSM should not be performed" and "HO to GSM shall not be performed". Thus, the core network is not able to force the RNC to carry out a handover from a 3G to a 2G radio access network, but only to propose a handover. The final decision is taken by the RNC based on additional criteria like load, coverage and radio connection quality. Furthermore, in load and service based handovers, an RNC hands mobile terminals over to a base station subsystem (BSS) periodically and in groups, not immediately and on an individual basis.

All known intersystem handovers are decided by the network, which prevents a communication system to make use of possible advantages of an intersystem handover in several situations.

The current 3GPP specifications treat UTRAN, GSM and GERAN radio access cells equally, i.e. there are no strong means for the network operator or the user to guide a mobile terminal towards the most suitable radio access technology. It is known to favor one or another public land mobile network (PLMN), location area (LA), routing area (RA) or cell based on defined criteria. However, cells of different radio access technologies may be mixed in a single PLMN, LA or RA, and no method has been proposed so far for forcing the mobile terminal to a specific radio access technology, and not even for favoring a certain radio access technology. Only if a requested service cannot be provided in the current serving cell, the call may be handed over to another cell by the network, or the call may be cleared.

Another problem that cannot be solved with the currently known methods relates to licensing. In media world, it is a common approach to provide a license for distributing a specific content only through a certain access, e.g. for TV and radio broadcasting via cable, via a terrestrial access, i.e. analog, digital, AM, FM, HF, UHF, and/or VHF, or via satellite systems. In mobile communications, in contrast, content licenses are rather new. Still, some content providers have already sold exclusive licenses to mobile network operators and service providers for providing a certain content on a limited radio access spectrum, e.g. GSM and UMTS bands or technologies. An operator typically has both 2G and 3G networks and can provide a lot of content via 3G radio access to 3G/2G dual-mode terminal users. However, if this operator has only a 2G license for a certain content, while its competitor has an exclusive 3G license for the same content, it will try to find technical solutions to provide the licensed content to its dual-mode subscribers on the 2G band. Consequently, there is a need to be able to provide a specific radio access technology to the dual-mode terminal.

Further, a situation may arise in which the mobile terminal desires to use services which are not available in the system with which the mobile terminal is registered. A 2G/3G mobile terminal, for example may operate either in a 3G WCDMA system or in a 2G GSM system. The WCDMA system is then regularly the preferred system. GSM, however, has some services which do not exist in 3G, for example transparent facsimile. At the same time, a handover has to be initiated by the network, and the mobile terminal is not able to inform the network that it has to be handed over before the setup of the requested call. If the mobile terminal is in a WCDMA coverage area, this transparent facsimile service can thus not be used without delay.

PCT application WO 01/31963 describes a method of handing over a mobile terminal from a first cell in a first type of network to a second cell in a second type of network. In particular, it is proposed that the handover is triggered by a request for a service that requires a capability of the second type of network.

UK patent application GB 2 352 586 relates to a handover of a mobile terminal between mobile networks. When a mobile terminal requests handoff from a currently serving network, the current network provides a list of other available networks to it. The mobile terminal selects between the available networks based on preference information and signals to the first network at least one preferred network.

### SUMMARY OF THE INVENTION

It is an object of the invention to enable a mobile terminal in a communication system to initiate a handover to a required or desired type of radio access network in an alternative way.

This object is reached with a method for performing an intersystem handover of a mobile terminal accessing a communication network via a radio access network of a first type. The communication network comprises at least this radio access network of this first type and a radio access network of a second type. It is proposed that the intersystem handover is initiated by a transmission of the mobile terminal to the communication network. This transmission is to comprise information indicating that an intersystem handover from the radio access network of the first type to the radio access network of the second type should be performed. The information is to be based on one of a requested content, a requested access point number, a requested uniform resource location (URL) and a requested internet protocol (IP) address.

It is to be noted that the term handover is meant to include as well cell reselections.

The object of the invention is equally reached with a mobile terminal and a communication network comprising means for realizing the proposed method. Further, the object is reached with a network element switch comprising means for analyzing an indication of a desired or required intersystem handover by a mobile terminal and for triggering such an handover. Finally, the object of the invention is reached with a communication system comprising such a mobile terminal and such a communication network.

The invention proceeds from the idea that in some cases the most advantageous radio access technology is mobile terminal specific and can only be known at the network after a corresponding indication by the mobile terminal. Thus it is proposed to base a decision to handover a mobile terminal from one radio access technology to another on an initiation by a transmission of the mobile terminal, wherein the transmission comprises information based on a requested content, a requested access point number, a requested uniform resource location (URL) and a requested internet protocol (IP) address.

It is an advantage of the invention that an intersystem handover can be performed immediately and based on the individual requirements of mobile terminals.

Based on the invention, a mobile phone is enabled in particular to initiate a handover request prior to or after the setup of a requested call or context activation, in case such a handover is required. The handover can be desired after a call setup or context activation e.g. when a user is browsing on the operator's portal and clicks on a 2G-only uniform resource location (URL) representing the content he/she wants.

Preferred embodiments of the invention become apparent from the subclaims.

The information indicating that an intersystem handover should be performed can consist either in a direct request by a mobile terminal of a specific radio access technology, or in an information from which the necessity of a handover can be derived indirectly in the network.

For enabling a direct request, for instance, preferred radio access technologies can be stored in a list in the mobile terminal. This list may indicate which service or content is to be requested via which radio access technology. A corresponding indication is then transmitted by the mobile terminal for each desired content or service. The mobile terminal can communicate the preferred radio access technology to the network in particular in a new information element added to the currently existing connection establishment signaling, or in a new message added to the signaling sequence.

For enabling an indirect request, a list of preferred radio access technologies can reside in a network element of the communication network, in particular in the home location register (HLR) of the mobile terminal, in a service aware gateway GPRS (general packet radio system) support node (GGSN) or in a web switch. If the radio access technologies are associated in this list for example to specific contents, services, types of contents or services, or access point names (APN), a content, a service or an access point name requested by a mobile terminal can be used for selecting a radio access technology from the list stored in the HLR, the service aware GGSN or the web switch.

Beside the APN, also a URL requested by a mobile terminal or a target IP address can be used as indication of a desired or required radio access technology.

While the APN can be evaluated in particular in an SGSN of a core network of a communication system, the URL or target IP address can also be analyzed in a GGSN of a core network of a communication system or in a web switch providing a connection between the core network and a content server. At present, such a web switch is used for various traffic management tasks.

In all cases, the network can determine the need for a handover from the received information and, based on this, allow content delivery without handover, grant a handover and allow content delivery after successful handover, or block the requested content delivery. When the user is already browsing using a PDP (packet data protocol) context or data call, the content would be delivered to the terminal using the already existing PDP context or data call.

In a first preferred embodiment of the invention, the handover depends on the content requested by a mobile terminal. This approach thus links content and radio access, which constitute from the system design point of view two remote aspects. Based on a content related information by the mobile terminal, a handover or a network controlled cell reselection is performed. It is an advantage of this particular embodiment of the invention that the content providers can restrict the access to their content to a certain network and e.g. control billing based on this restriction.

This embodiment of the invention is of particular relevance for a case in which the operator wants to hand over dual-mode mobile terminals from a first type of radio access network to a second type of radio access network when the subscriber is browsing the operator's portal and tries to access a content for which the operator has only a license for the second type of radio access networks. The first network can hand over the subscriber to the second network in a way that is hardly noticed by the subscriber, who can then also use the services via the second network. Such a dual-mode terminal can be for instance a 3G/2G mobile terminal, the first radio access network a 3G radio access network and the second radio access network a 2G radio access network. A handover from a 2G to a 3G system will usually not be required and does therefore not have to be provided necessarily.

Advantageously, the content detection point is placed as close as possible to the handover control point, in order to minimize the number of interfaces impacted.

For a content based handover, the information indicating a required handover can be given for instance by the content itself, or by an APN, a target IP address or an URL transmitted by the mobile terminal to the network. In case two different access point names or target IP addresses are provided for different radio access technologies, the network can determine based on the provided access point name or target IP address which technology has to be used and thus whether a handover is required. The mobile terminal might comprise means for enabling a user of the terminal to manually switch between two different access point names or target IP addresses in order to access the services provided via two different types of radio access networks. In case the content detection is realized based on a transmitted URL, e.g. in a service aware GGSN or a web switch, which stores for comparison a list of URLs of content that is available only via a specific radio technology, a better user-friendliness and a more flexible service design can be achieved than with the APN or target IP address based solution, since it allows the usage of a single APN and a single target IP address for different types of content, e.g. 2G-only and radio access independent content. On the other hand, also a possibility of selecting e.g. between different APNs can have a benefit for a user, since it provides the user with a greater control of his/her terminal. The user could for example select a preferred billing type by selecting the APN, in case the billing types are different in GPRS and 3G. With a service aware GGSN, this flexibility can be provided by only one context AP covering multiple service APNs.

In a second preferred embodiment of the invention, the handover depends on preferences of the mobile terminal for a specific radio access technology for a specific connection, e.g. because the service that is requested by the mobile terminal is a service which works more efficiently or more economically with this specific radio access technology. It is an advantage of this particular embodiment of the invention that services can be flexibly allocated network resources on a mobile terminal basis, which allows extending the network management to the terminal.

An intersystem handover according to the invention may take place in particular during a call setup or at a PDP context activation.

For a WCDMA-to-GSM handover, the actual handover can be realized for example as an extension of the known load and service based handover by introducing a new possible value "HO to GSM shall be performed" for the optional "Service Handover" Information Element in the RANAP messages "RAB Assignment Request" and "Relocation Request" on the Iu interface. In contrast to a known 3G system, the RNC has no longer complete handover control with such a new value, even though the final decision will still be taken by the RNC. This new value is suited for enabling as well the proposed content based handover as the proposed new service based handover. Alternatively, a new parameter can be defined for enabling one or more kinds of handovers according to the invention.

The invention is of particular interest for the case that a specific radio access technology is preferred for a multi-band mobile terminal due to some technical reason like the field strength of received signals, or the advantages of the 3G system for a 2G/3G dual-band mobile terminal. The invention then allows to switch to another, not preferred radio access technology based on a new kind of reason, like the availability of a desired content or service, if this is feasible.

Advantageously, an embodiment of the invention is able to work in multi-service environments, which provide for instance WAP (wireless application protocol), HTTP (hypertext transfer protocol) and FTP (file transfer protocol) services.

Evidently, different kinds of intersystem handovers can be enabled in a communication system, the invention only requiring that there is at least one kind of intersystem handover enabled which is initiated by a mobile terminal.

Accordingly, the intersystem handover of the invention cannot only be implemented for WCDMA and GSM/GPRS, but for any systems between which such an intersystem handover may be of interest, for instance also for a handover of a mobile terminal from a WLAN (wireless local area network) to GSM.

Further, the invention can be implemented as well for packet switched services as for circuit switched services.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: shows a communication system in which a first and a second embodiment of the invention can be employed;
- Fig. 2: is a message sequence chart illustrating the second embodiment of the invention in a first situation;
- Fig. 3: is a message sequence chart illustrating the second embodiment of the invention in a second situation;
- Fig. 4: is a message sequence chart illustrating the second embodiment of the invention in a third situation;
- Fig. 5: is a message sequence chart illustrating the second embodiment of the invention in a fourth situation;
- Fig. 6: shows a further communication system in which the second embodiment of the invention can be employed analogously;
- Fig. 7: shows a communication system in which a third embodiment of the invention can be employed;
- Fig. 8: is a message sequence chart illustrating the third embodiment of the invention;
- Fig. 9: shows a further communication system in which the third embodiment of the invention can be employed analogously;
- Fig. 10: shows a communication system in which a fourth embodiment of the invention can be employed;
- Fig. 11: is a message sequence chart illustrating the fourth embodiment of the invention; and
- Fig. 12: shows a further communication system in which the fourth embodiment of the invention can be employed analogously; and
- Fig. 13: is a message sequence chart illustrating a fifth embodiment of the method according to the invention.

### DETAILED DESCRIPTION OF THE INVENTION

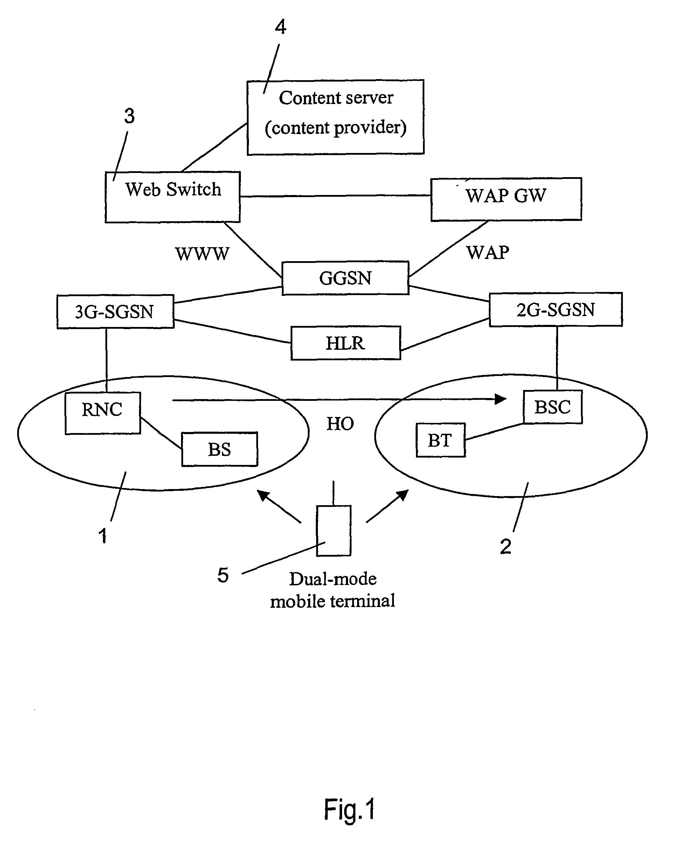

Figure 1 shows a communication system in which an embodiment of the invention enabling a content-based intersystem handover can be employed for a packet switched connection.

It is to be noted that the term NCCRS (Network Controlled Cell Re-Selection) to 3G, is meant as well "Network initiated cell change order procedure to UTRAN" as said in the specifications.

The communication system comprises a 3G UTRAN 1 and a 2G GSM radio access network 2. The UTRAN 1 comprises in turn a base station BS connected to a radio network controller RNC, while the GSM access network comprises a base station BS connected to a base station controller BSC.

The RNC of the UTRAN is further connected via a 3G-SGSN to a home location register HLR and a gateway GPRS support node GGSN. The BSC of the GSM access network is further connected via a 2G-SGSN to the HLR and the GGSN.

SGSNs, HLR and GGSN belong to the core network of the communications system. The SGSNs are switches that serve a mobile terminal in its current location for packet switched services. The GGSN is a switch of the core network providing a connection for packet switched services to external networks. For this function, the GGSN is connected on the one hand for html (Hypertext Markup Language) services, indicated in the figure with "WWW", via a web switch 3 to a content server 4 of a content provider. On the other hand, the GGSN is connected for WAP services via a WAP GW (gateway) and the web switch 3 to the content server 4 of a content provider. The ensemble of 2G and 3G radio access networks 1, 2 and the core network will also be referred to as communication network.

The depicted communication system further comprises a mobile terminal 5. This terminal 5 is a 2G/3G dual-mode terminal, which supports GSM/GPRS and WCDMA. The mobile terminal 5 is thus capable of accessing the UTRAN 1 as well as the GSM access network 2.

The operator of the communication network has only a license for providing a specific content via the 2G system, not the 3G system.

Now, a first embodiment of the method according to the invention that can be realized in the system of figure 1 will be explained.

In an exemplary initial state, the mobile terminal 5 has a non-real time (NRT) packet switched (PS) connection in the UTRAN 1, and it is in connected mode as the user browses the portal. An alternative initial connection could be for instance a real time packet switched connection.

When the mobile terminal now requests a specific content, it has to be determined in the communication network, whether the request by the mobile terminal implies a request for a handover, because this content is only allowed to be provided via the 2G system.

To this end, first the radio access technology has to be known which the 3G/2G mobile terminal is currently using. When the 3G-SGSN receives a request for a content, the radio access technology is inherently known, since the 3G-SGSN is connected to the UTRAN 1, which is a 3G-only network element.

Next, it has to be determined which type of content is requested by the terminal 5, i.e. a 3G/2G content type or a 2G-only content type. In the presented embodiment of the invention, the type of the requested content is determined based on an access point name, which access point name is requested by the mobile terminal 5 together with the content.

The APN is an identifier which is used in service design to identify the service to the user of the terminal 5. The format employed for the APN is "my.isp.com.myoperator.fi.gprs", in which my.isp.com is a network identifier and myoperator.fi.gprs an operator identifier. The network identifier is linked to a certain service, and the operator identifier indicates in which operator's network the GGSN is.

The APN thus differentiates services from each other and makes it possible to limit the set of services which are accessible to a certain user. The APN can indicate the type of a requested service, e.g. WAP, HTML, or email. The APN can also indicate a desired subnet, e.g. corporate, ISP (internet service provider) etc., and/or indicate a desired IP (internet protocol) version, e.g. IPv6 support in home GGSN. Physically, the APN corresponds to an access point in the GGSN. In GPRS, the APN is part of the PDP context and the user's current APN is known to the terminal 5, the SGSN, the GGSN and the HLR.

An APN is stored on the one hand in the HLR and requested on the other hand by the mobile terminal 5 in a PDP context activation. The SGSN uses the APN to check whether the requested service is authorized by comparing the requested APN with the subscriber data stored in the HLR. Based on the APN and the DNS (domain name system), the SGSN further determines the GGSN which supports the requested service.

In the first embodiment of the invention, a different APN is allocated to 3G/2G content services than to 2G-only content services. When 3G/2G content and 2G-only content are made available from two different APNs, the SGSN can detect the type of the requested content by analyzing the requested APN and cause a handover if necessary.

For causing a handover, the SGSN sends a handover trigger to the RNC. The handover trigger is included in a new information element "Handover to GSM shall be done" in the "RAB Assignment Request" RANAP message to the RNC. Upon this unconditional request, the RNC performs the handover to the 2G access network 2. The proposed new functionality of SGSN and RNC respectively requires only minor changes to existing SGSN and RNC functionality. As a result, the mobile terminal 5 is able to access the desired 2G-only content. The handover from the UTRAN 1 to the GSM access network 2 is indicated in figure 1 with a label "HO".

As a precaution, there should further be a way to handle 3G-only users, i.e. those users employing a single-mode 3G terminal, which try to access 2G-only content, even though in some cases this will already be prevented by their subscription in the HLR. In the proposed APN-based solution, the 2G-only APNs can be excluded from the list of allowed APNs for a 3G-only subscriber in his/her HLR. Thus, providing two separate APNs for 3G/2G dual-mode services and 2G-only services allows in addition to exclude 2G-only service from 3G-only users.

After the handover of the mobile terminal 5 to the GSM access network, the mobile terminal 5 can be kept on the 2G side by including a parameter "HO to UMTS shall not be performed" into the handover message on the A interface from the core network to the BSC. The other two possible parameters are "HO to UMTS should be performed" and "HO to UMTS should not be performed".

When the mobile terminal 5 has switched again to idle mode, it will connect to the strongest 3G or 2G cell, unless the operator has given GSM cells a high priority in a WCDMA neighbor list. Such a high priority for GSM cells will keep the idle mobile terminal 5 in GSM, even if it receives stronger signals from WCDMA cells, as long as they remain below a predetermined maximum threshold level.

In a second embodiment of a method according to the invention, the content type can be detected in the web switch 3 of figure 1 based on a URL requested by the mobile terminal 5. The web switch stores on the one hand a list of URLs corresponding to 2G-only content. On the other hand, the web switch 3 analyses all http traffic flowing through it and detects a URL requested by the user which corresponds to 2G-only content.

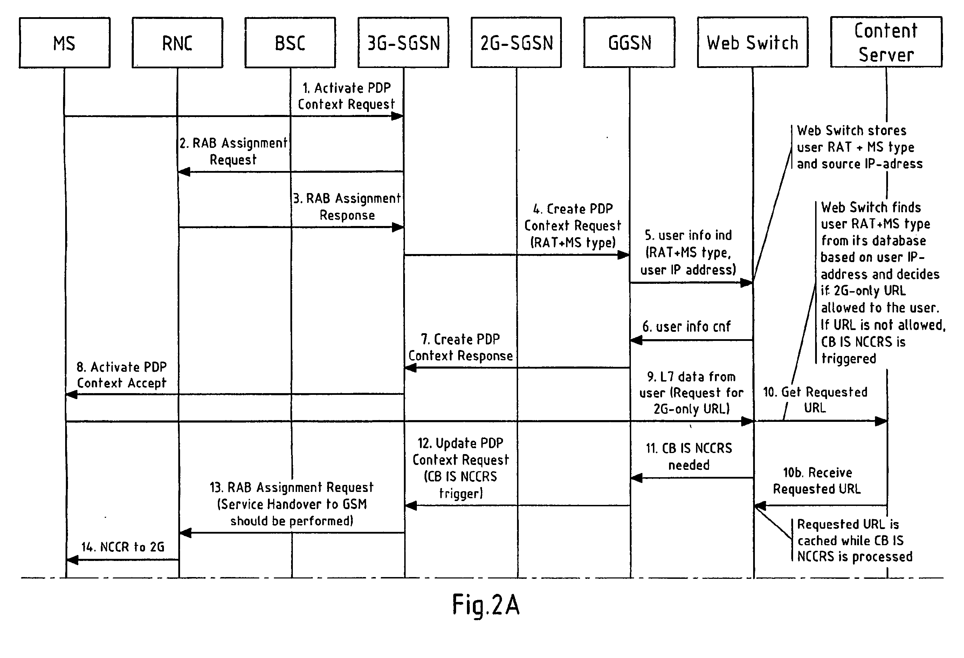

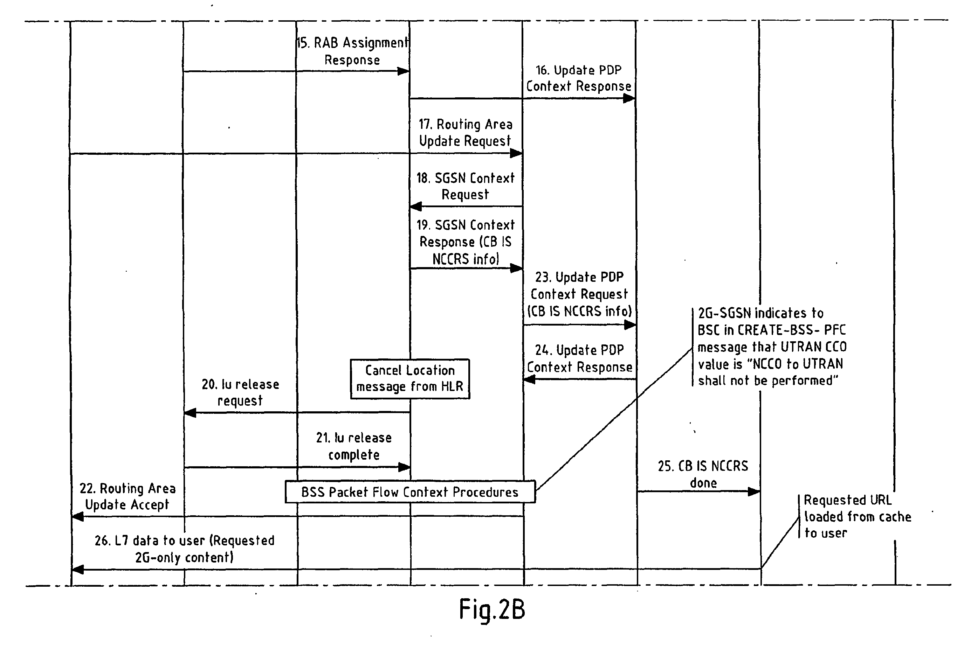

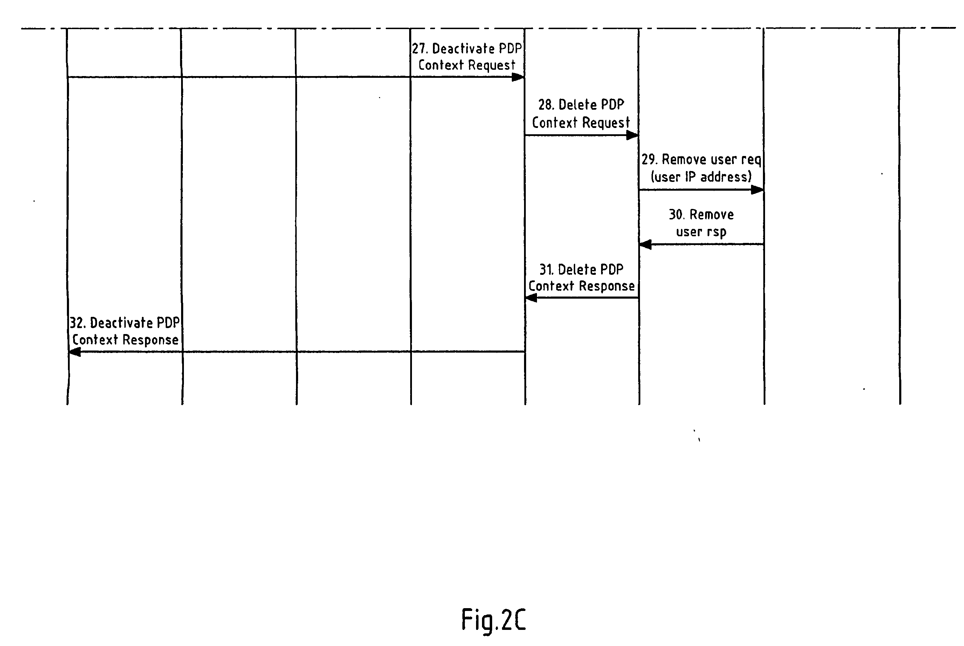

In the following, four basic cases of a URL based content detection in a web switch will be described with reference to figures 2 to 5. Each of these figures comprises from left to right a respective vertical line associated to a mobile station MS corresponding to the mobile terminal 5 of figure 1, and to the RNC, the BSC, the 3G-SGSN, the 2G-SGSN, the GGSN, the web switch 3 and the content server 4 of figure 1. In addition, a respective sequence of messages transmitted between these elements is indicated in figures 2 to 5 by labeled arrows.

Figure 2, which is distributed as figures 2a-2c over three pages, depicts a sequence of messages transmitted in a first case, in which the web switch triggers a handover as a 2G/3G dual-mode mobile station 5 connected to the UTRAN 1 tries to access a 2G-only content.

In a first message 1, the mobile station transmits a PDP Context Activation Request to the 3G-SGSN. As a result, a RAB (radio access bearer) Assignment Request and Response is exchanged between the 3G-SGSN and the RNC in messages 2 and 3.

Next, the 3G-SGSN determines the RAT+MS type of the user, i.e. the type of the employed mobile station and the radio access type currently used. The RAT+MS type is determined based on the radio access capability of the mobile station, the IMSI (international mobile subscriber identity) range of the SIM (subscriber identity module) and/or authentication vectors received from the HLR. The MS+RAT type can have four values: 3G single-mode mobile station accessing a 3G radio access network, 2G/3G dual-mode mobile station accessing a 3G radio access network as in the present case, 2G/3G dual-mode mobile station accessing a 2G radio access network, or 2G single-mode mobile station accessing a 2G radio access network. The radio access type is obviously 3G in case of a connection of the mobile terminal to the 3G-SGSN. The 3G-SGSN inserts the determined RAT+MS type in the Private Extension Field of a Create PDP Context Request sent from the 3G-SGSN to the GGSN in message 4.

With message 5, the GGSN relays a user information comprising the RAT+MS type and the user's source IP address to the web switch. It is to be noted that different PDP contexts of the same user may have different IP addresses. The web switch stores the received RAT+MS type and the source IP address in its database. Thus, the web switch is now able to identify the user according to his/her stored IP address. The web switch confirms the reception of the user information with message 6 to the GGSN.

Then, the requested PDP context is activated with message 7 "Create PDP Context Response", which is transmitted from the GGSN to the 3G-SGSN, and with message 8 "Activate PDP Context Accept", which is transmitted from the 3G-SGSN to the mobile station.

The mobile station requests with message 9 transmitted to the GGSN a URL belonging to a 2G-only content.

The request is forwarded in message 10 via the web switch to the content server. The web switch detects that the received URL is present in the stored list of URLs corresponding to 2G-only content. The web switch requests the URL from the content server, and receives the requested URL in message 10b. Since the requesting mobile station is identified by the web switch based on the user's source IP address to be a 2G/3G dual-mode mobile station which is currently connected to 3G, the web switch then sends a content-based inter-system network controlled cell re-selection (CB IS NCCRS) trigger to the GGSN.

The CB IS NCCRS trigger is further conveyed in an optional field of an Update PDP Context Request message, message 12, to the 3G-SGSN. The 3G-SGSN interprets the message based on the optional field content as CB IS NCCRS trigger and triggers with message 13 a service based cell reselection (SB IS NCCRS) in the RNC. For the RNC, a service based cell reselection is the same as a content based cell reselection, since both use the same service handover information element parameters to trigger a cell re-selection in the RNC.

With message 14, the RNC commands the mobile station to perform a cell re-selection in 2G. An RAB Assignment Response is sent to the 3G-SGSN as message 15 and an Update PDP Context Response further to the GGSN as message 16.

The mobile station is able to find a 2G cell by itself and transmits a routing area update request on the 2G side to the 2G-SGSN in message 17.

With a SGSN context request and response between 2G-SGSN and 3G-SGSN in messages 18 and 19, the 2G-SGSN obtains the old SGSN Context of the mobile station from the 3G-SGSN. The 3G-SGSN includes an information in an optional field of message 19 indicating that the mobile station has been moved to 2G due to content-based access reasons.

When a Cancel Location message is now received at the 3G-SGSN from the HLR, the Iu-interface is released with a message exchange between the 3G-SGSN and the RNC, messages 20 and 21. The Cancel Location message from the HLR is indicated in the figure in a first rectangle. In a subsequent BSS Packet Flow Context procedures, which is indicated in the figure in a second rectangle, the 2G-SGSN indicates to the BSC in a CREATE-BSS-PFC message that a handover to the UTRAN shall not be performed. The reason for this value is that the mobile station shall not be moved immediately back to 3G while downloading 2G-only content via the 2G radio access, since this would violate the content license.

With message 22, the Routing Area Update Request of message 17 of the mobile station is then accepted by the 2G-SGSN.

Messages 23 and 24 are employed in a request/response message exchange between 2G-SGSN and GGSN for updating the PDP Context in the GGSN. The 2G-SGSN includes in the request a handover (CB IS NCCRS) information indicating that the handover is being progressed.

With message 25, the GGSN informs the web switch that the handover (CB IS NCCRS) has been completed for the user for which the web switch triggered the handover with message 11.

The web switch retrieves from its cache the URL which the user requested in message 9 from the content server while being on the 3G side. Then the web switch sends the URL as message 26 to the mobile station in http.

The mobile station stays on the 2G side at least until some time later, when it requests with messages 27 and 28 from the 2G-SGSN and via the 2G-SGSN from the GGSN to deactivate the PDP context used for the download. The GGSN identifies the PDP context's IP address and requests the web switch in a subsequent request message 29 to remove this particular IP address of the concerned user from its memory. The web switch removes the IP address and responds with message 30. The deactivation of the PDP context is completed all the way down to the mobile station with message 31 to the 2G-SGSN and further with message 32 to the mobile station.

All possible other PDP contexts of the user will be kept until they are deactivated. The user can access 2G-only content using the other PDP contexts, since he/she is in the 2G system now, and no content license restrictions apply in 2G. Later, the mobile station may move to 3G autonomously.

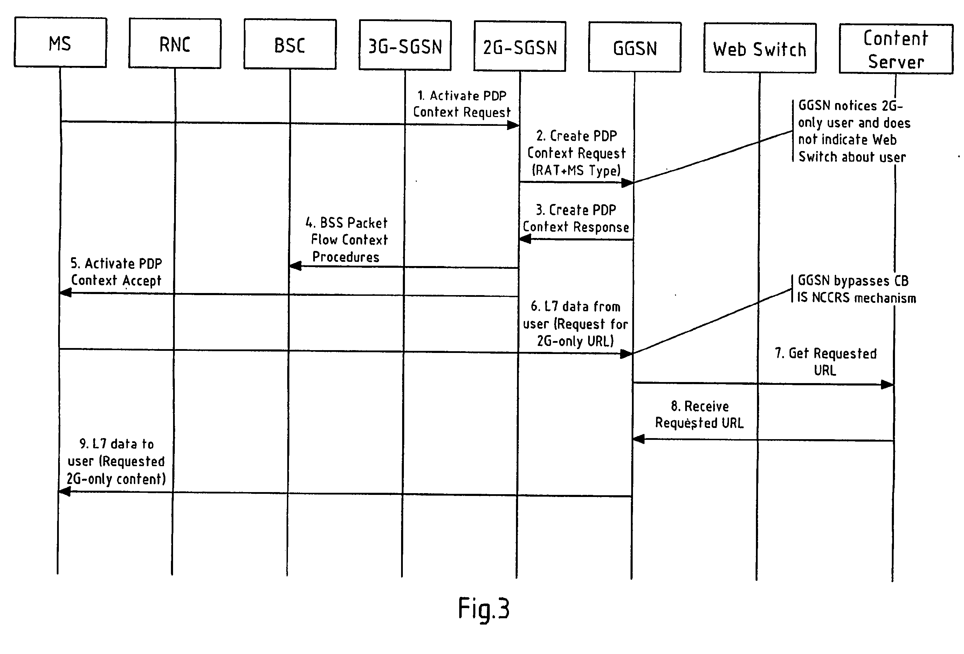

Figure 3 depicts a sequence of messages for a second case in which a 2G-only user requests a 2G-only content in 2G, and in which the web switch 3 is bypassed.

Corresponding to the first case, the mobile station transmits in a first message a activate PDP context request to the 2G-SGSN, and the 2G-SGSN determines the RAT+MS type as before the 3G-SGSN. In message 2, the determined RAT+MS type is transmitted again to the GGSN.

The GGSN recognizes from the received RAT+MS type parameter that the user is 2G-only. In contrast to the first case, the GGSN does not provide the IP address of this user to the web switch, since the user can access any content only via 2G. Consequently, the IP address of the user is not stored in the memory of the web switch.

In messages 3 to 5, a Create PDP Context Response is transmitted, a "BSS Packet Flow Context" procedure performed, and an Activate PDP Context Accept transmitted. These messages correspond to messages in the first case, except that here the 2G-SGSN is involved instead of the 3G-SGSN. In message 6, the mobile station requests a 2G-only URL from the GGSN, which forwards a "Get Requested URL" message via the web switch to the content server in message 7. The GGSN receives the requested URL via the web switch in message 8.

When the web switch recognizes a 2G-only URL in the requested http stream, it investigates whether the source IP address of the http stream is in its user database.

Since the IP address is not found, the web switch takes no action in this case.

Thus, the requested 2G-only content can be forwarded by the GGSN immediately to the mobile station.

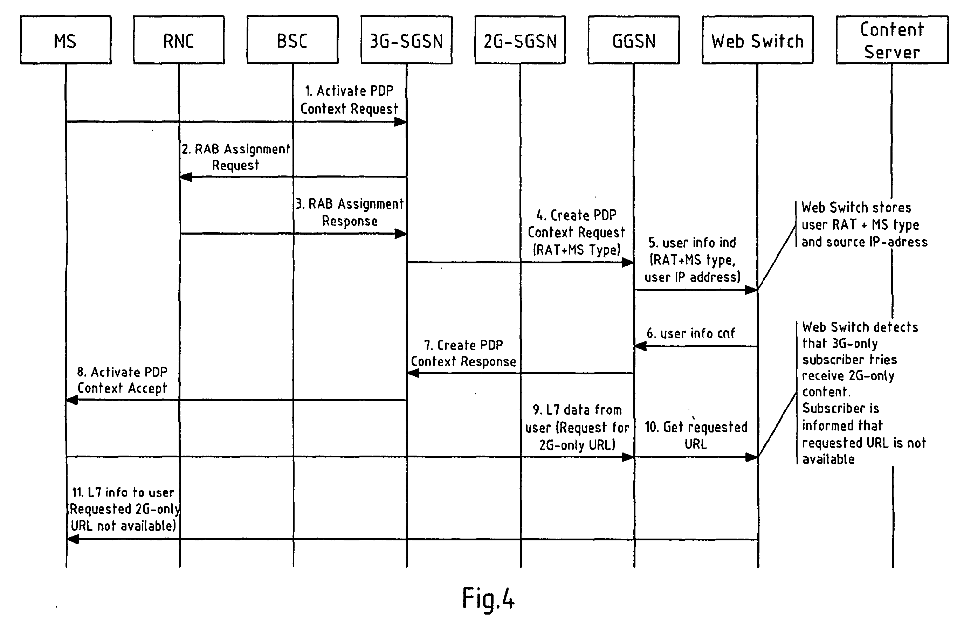

Figure 4 depicts a sequence of messages for the third case, in which the web switch denies a 2G-only content delivery as a 3G-only user requests it in the 3G system.

Messages 1 to 9 basically correspond to messages 1 to 9 of the first case, with which messages a PDP context is activated and a 2G-only URL requested by the mobile station. The web switch also stores again a received RAT+MS type and an IP address of the user received from the GGSN.

However, when the GGSN tries to transmit a "Get Requested URL" message in message 10 to the content server via the web switch, the web switch recognizes that a 3G-only subscriber tries to access a 2G-only content. A 3G-only mobile station cannot be moved to 2G, therefore the web switch denies the content delivery to the user. The web switch can send an appropriate html page to the user in a message 11 as a way to inform the user that the content cannot be accessed.

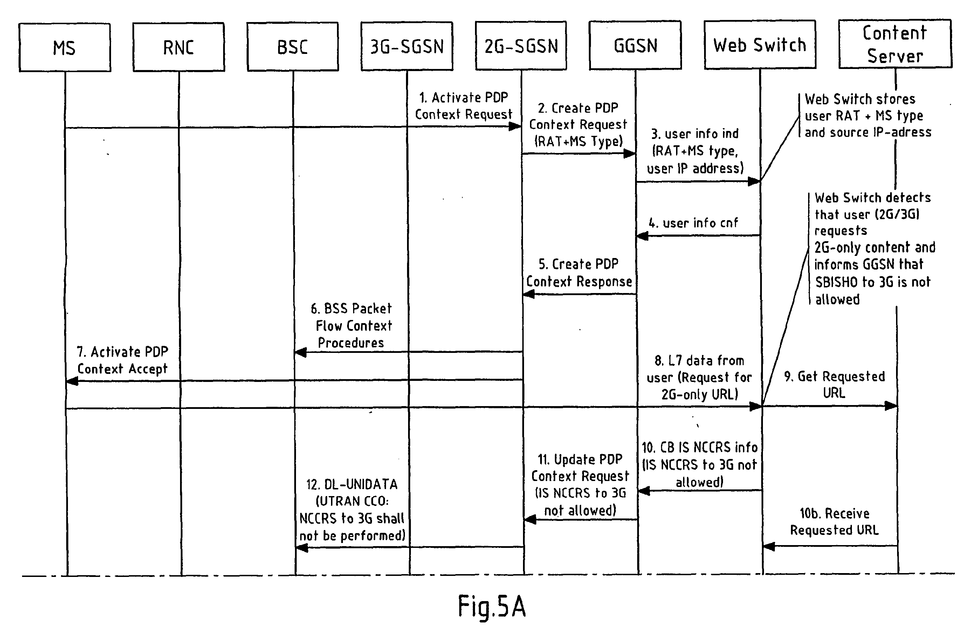

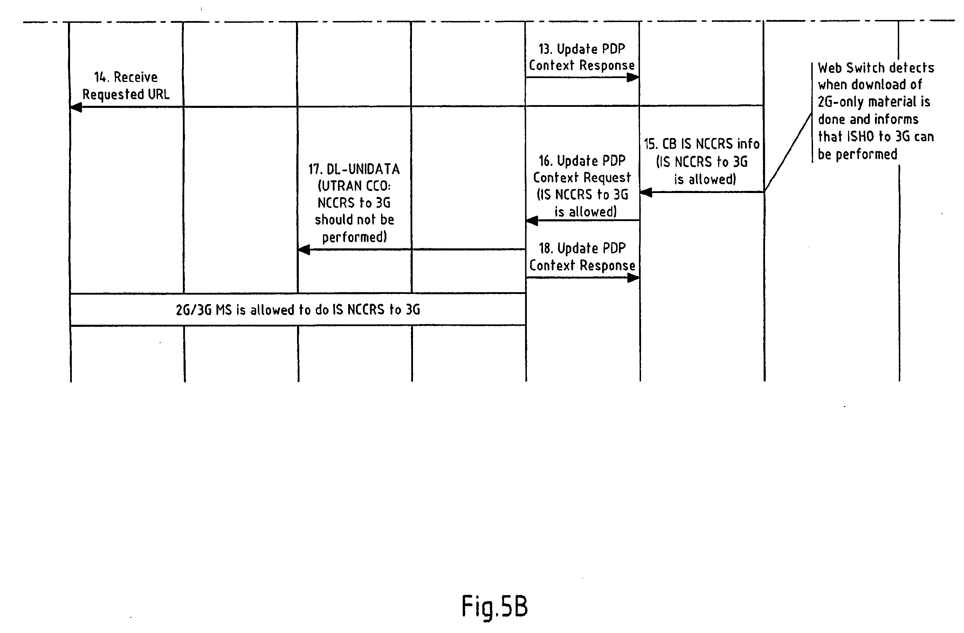

Figure 5, which is distributed as figures 5a and 5b over two pages, finally, depicts a sequence of messages for the forth case, in which a handover is prevented during a 2G-only content download of a 2G/3G user in a 2G system.

For activating a new PDP context, the messages 1 to 7 in this case correspond basically to messages in the first and third case, except that the 2G-SGSN is involved in the message exchange instead of the 3G-SGSN. Thus the RAB assignment request and response messages between the 3G-SGSN and the RNC are not included. Instead, after the "Create PDP context Response" from the GGSN to the 2G-SGSN, a "BSS Packet Flow Context" procedure is performed between the 2G-SGSN and the BSC as in the second case.

Then, the 2G/3G user requests a 2G-only content with message 8. The web switch captures the request before it proceeds to the content server as message 9.

The web switch detects the RAT+MS type and realizes that this user could move to 3G during the download of the requested 2G-only content. In order to prevent such a move and thus a violation of the content license, the web switch sends an information to the GGSN in the Private Extension Field of an Update PDP Context Request in message 10. The information indicates that a handover (IS NCCRS) shall not be allowed for this mobile station until an indication to the contrary is received from the web switch. The information is passed on by the GGSN to the 2G-SGSN in message 11 in an Update PDP Context Request, and further on to the BSC in a DL UNITDATA message, message 12. The Update PDP Context Request is responded by the 2G-SGSN with an Update PDP Context Response in message 13 to the GGSN.

The web switch moreover receives in message 10b the requested URL and forwards it to the mobile station in message 14.

After this specific content download, i.e. when the content has been fully unloaded from the cache of the web server, and a possible additional time defined by the operator (e.g. by means of the Ready Timer in the 2G-SGSN), the web switch informs the GGSN in message 15 that the download has been completed, and that a handover (IS NCCRS) can be performed for this mobile station. Such a handover could also be based on other criteria than on a requested content. It is to be noted that the information about a completed download relates only to the download requested in message 8, even though user may start additional downloads soon after this request.

Like the indication of a prohibition of a handover, the indication of the allowance of handover is forwarded to 2G-SGSN in an Update PDP Context Request in message 16. The BSC is further informed about this allowance in a DL UNITDATA messages 17 containing the "NCCRS to 3G should not be performed" indication. This indication removes the intersystem handover restriction set earlier by message 12. The request in message 16 is finally responded by an Update PDP Context Response in message 18 sent from the 2G-SGSN to the GGSN. As a result, the 2G/3G mobile station is allowed again to be handed over to 3G, which is indicated in figure 5 in a rectangle.

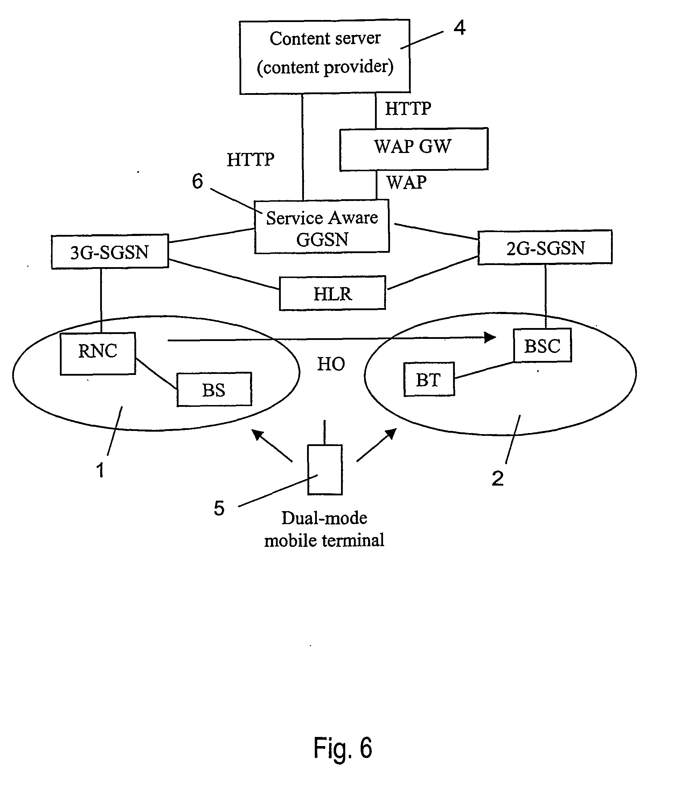

Figure 6 shows a communication system in which the described second embodiment of the invention enabling a content based handover for a packet switched communication can be employed analogously as in the communication system of figure 1. The communication system of figure 6 comprises largely the same units in the same arrangement as the communication system of figure 1, i.e. a 3G UTRAN 1 with a base station BS and a radio network controller RNC, a 2G GSM radio access network 2 with a base station BS and a BSC, a 3G-SGSN, a 2G-SGSN, a home location register HLR, a WAP GW, a content server 4 of a content provider and a mobile terminal 5.

The system of figure 6, however, comprises a service aware GGSN 6 instead of the non service aware GGSN of the system of figure 1. Since a service aware GGSN 6 enables the functions of a regular GGSN and in addition the functions of a web switch, it is able to access the content server 4 directly or only via.the WAP GW. Therefore, the web switch 3 of the system of figure 1 is not required in this system. The service aware GGSN 6 also stores the list of URLs corresponding to 2G-only content and carries out the functions which were described with reference to figures 2 to 5 to be carried out by the GGSN and the web switch 3.

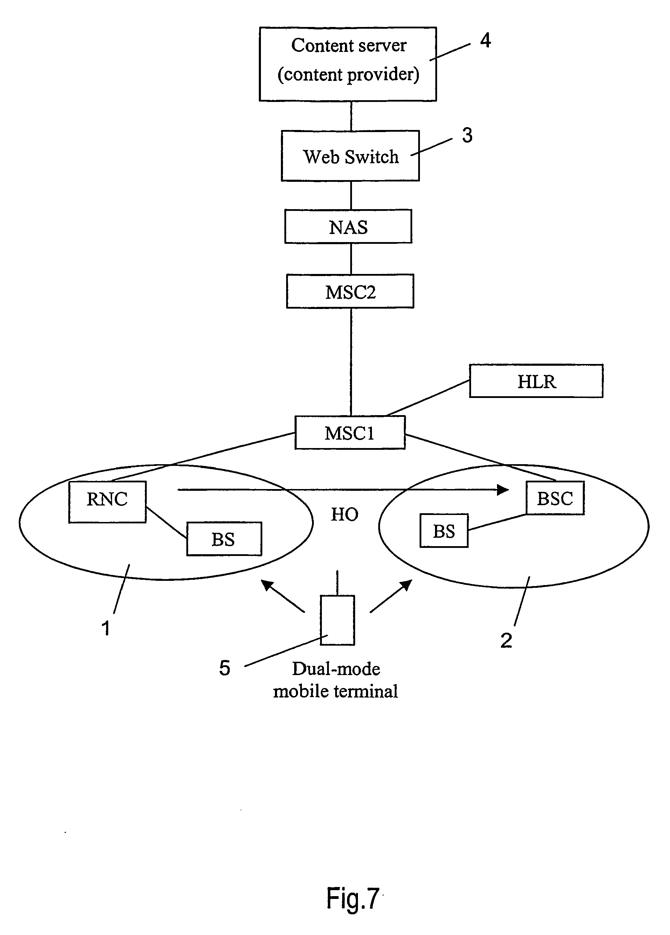

Figure 7 shows a communication system in which a third embodiment of the invention enabling a content-based intersystem handover can be employed, this time for a circuit switched communication. To those units of figure 7 which correspond to units of figure 1, the same reference signs were assigned.

The communication system comprises again the mobile terminal 5, the 3G UTRAN 1, the 2G GSM radio access network 2, the web switch 3 and the content server 4 of figure 1.

In contrast to figure 1, however, a connection of the RNC of the UTRAN 1 and of the BSC of the GSM access network 2 to a first mobile switching center MSC1 is depicted. The MSC1 is further connected to the HLR and to a second mobile switching center MSC2. Alternatively, the MSC1 and the MSC2 could be realized by a single mobile switching center. The MSC1 and the MSC2 both comprise an MSC server (MSS) and a media gateway (MGW), which could also be realized as separate units. The MSC2 is connected via a network access server NAS and the web switch 3 to the content server 4.

In figure 7, the MSC1, the MSC2, the HLR and the NAS belong to the core network of the communications system.

The MSC1, which supports 2G and 3G, is a switch serving a mobile station in its current location for circuit switched services. When moving from 3G to 2G, a user will usually stay under the same mobile switching center, provided that the mobile switching center supports both, 2G and 3G. Therefore, only a single first mobile switching center MSC1 is depicted in figure 7. Alternatively, the RNC and the BSC could be connected to two distinct first mobile switching centers, since an inter MSC handover is enabled as well by the system. But typically, there are only a few first mobile switching centers associated to one NAS.

The MSC2 is a switch providing a connection to the NAS.

The NAS provides a direct access from the PLMN to an IP network and thereby allows to reach a desired internet service provider (ISP) number. The NAS converts to this end circuit switched domain signaling into internet signaling and vice versa. Alternatively, an ISP number could be reached via an ISUP (ISDN User Part) interconnect of a PSTN/ISDN network which is connected to the core network. In any case, the communication between the MSC2 and the web switch 3 is based on the same principles as described above for the communication between the GGSN and the web switch 3.

The operator of the communication network has again only a license for providing a specific content via the 2G system, not the 3G system.

As described for the second presented embodiment of a method according to the invention, the content type can be detected in the web switch 3 based on a URL requested by the mobile terminal 5.

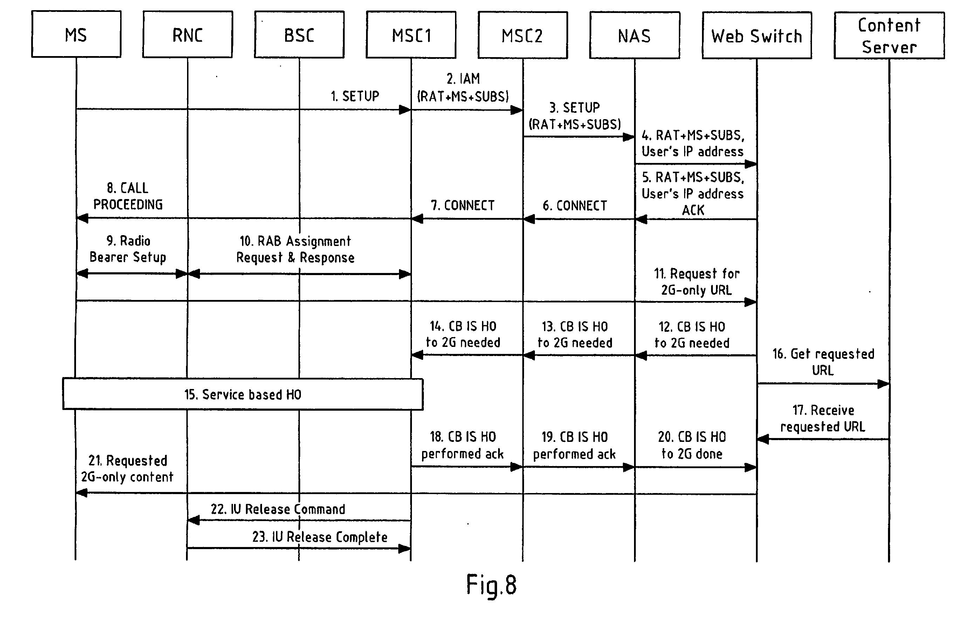

In the following, a case of a URL based content detection in the web switch 3 of the system of figure 7 will be described with reference to figure 8. The mobile station 5 is currently attached to the UTRAN 1 and tries to access a 2G-only content in a circuit switched call. In principle, the entire procedure is the same as the procedure described with reference to figure 2 for packet switched services.

Figure 8 comprises from left to right a respective vertical line associated to a mobile station MS corresponding to the mobile terminal 5 of figure 7, and to the RNC, the BSC, the MSC1, the MSC2, the NAS, the web switch 3 and the content server 4 of figure 7. In addition, a respective sequence of messages transmitted between these elements is indicated in the figure by labeled arrows.

In a first message 1, the mobile station MS transmits a SETUP request to the serving MSC1 for setting up the call.

Thereupon, the MSC1 determines the RAT+MS type of the user, i.e. the type of the employed mobile station and the radio access type currently used. The MSC1 evaluates to this end the current radio used, an indication of the access capabilities of the mobile station MS provided by the mobile station MS itself and authentication data received from the HLR. The radio access type in the current situation is 3G and the mobile station MS is a 2G/3G dual-mode mobile station. In addition, the MSC1 may receive subscription type information SUBS for this mobile station MS from the HLR. The subscription type indicates whether the user subscribed to 2G/3G, 2G-only or 3G-only. The user of mobile station MS subscribed to 2G/3G.

Next, the MSC1 sends the determined RAT+MS+SUBS information over a BICC (Bearer Independent Call Control) interface to the MSC2 in an IAM (Initial Address Message) as message 2.

The MSC2 forwards the RAT+MS+SUBS information in a SETUP message 3 over the DSS.1 (Digital Subscriber Signaling System No. 1) interface to the NAS, when the circuit switched data call is set up.

The NAS converts the received information into a proprietary message 4 between the NAS and the web switch, adds the IP address of the user to the message and transmits the message to the web switch. The web switch stores the received RAT+MS+SUBS information as well as the received IP address of the user and confirms reception of the information in message 5.

Alternatively or in addition, the NAS itself could store the RAT+MS+SUBS information. However, in case the web switch stores both, packet switched and circuit switched domain related RAT+MS+SUBS information, it does not have to distinguish from which network element, i.e. NAS or WAP GW, it shall ask the RAT+MS+SUBS information. On the other hand, the web switch must know to which network element, i.e. NAS or GGSN, it shall send a required handover trigger to, so the web switch must be aware whether the user attempts to access 2G-only content in the circuit switched or the packet switched domain. Storing user information in the NAS would be similar to the usage of RADIUS Id Proxy in PS domain.

A CONNECT message 6, 7 is then transmitted from the NAS to the MSC 2 and further to the MSC1, resulting in a CALL PROCEEDING message 8 from the MSC1 to the mobile station MS.

Next, a RAB Assignment Request and Response is exchanged between the MSC1 and the RNC in message 9, and thereafter, a radio bearer is setup by a message exchange 10 between the RNC and the mobile station MS.

The mobile station MS can now transmit in message 11 a request for a 2G-only URL to the web switch.

The web switch detects that the received URL is present in the stored list of URLs corresponding to 2G-only content. Therefore, it first checks the stored information on the user, in order to decide whether a content based intersystem handover (CB IS HO) should be done and whether such an intersystem handover is possible at all. Since the requesting mobile station is identified by the web switch to be a 2G/3G dual-mode mobile station which is currently connected to 3G and which also has a 2G/3G subscription, an intersystem handover is required for delivering the requested content and also possible. Thus, the web switch sends a content-based inter-system handover trigger to the NAS in proprietary message 12. While retrieving, forwarding and evaluating a subscriber type SUBS was not mentioned with reference to the CB IS NCCRS for a packet switched connection, this parameter could obviously also be used similarly in that case.

The information that a content based handover is needed is further conveyed in message 13 to the MSC2 and in message 14 from the MSC2 to the MSC1. The MSC1 interprets the message as handover trigger and triggers an ordinary service-based handover 15 in the radio access network. The only adaptation due to the particular reason for the handover consists in that a handover request (A-HO request) transmitted in this context on the A interface from the MSC1 to the BSC includes a service handover information element "ISHO to UTRAN shall not be performed". This information element ensures that the BSC will not initiate an intersystem handover back to 2G for this user during a 2G-only content download. In practice, the user must be kept in 2G until he/she has finished the data call. No changes to the Iu-CS interface between the MSC1 and the RNC are required for the handover.

During the message exchange 12-15 for the content based handover, the web switch transmits a message 16 to the content server for obtaining the requested URL. The content server provides the requested URL in message 17 to the web switch, which stores the received URL in a cache while the handover is performed.

When the content based intersystem handover has been completed, the MSC1 sends a "CB IS HO performed ACK/NACK" message 18 to the MSC2. The MSC2 forwards the acknowledgement to the NAS in message 19, which conveys it further to the web switch in message 20. Upon receiving the acknowledgement of the handover, the web switch starts a download of the cached 2G-only content to the user via the 2G BSC in message 21. The user is likely to maintain his/her circuit switched connection until he/she has downloaded all the content clips to his/her terminal. When the download is completed, an Iu Release Command is transmitted by the MSC1 to the RNC in message 22, and the RNC returns an Iu Release Complete message 23. The release is then terminated within the MSC.

After the user has ended the circuit switched data call, the mobile station MS selects access to the 2G or 3G system again based on conventional criteria, like signal strength etc.

For conveying the additional information between the MSC1, the MSC2 and the NAS in the third embodiment, a standardized User-to-user signaling (UUS) of BICC and DSS.1 or ISUP can be used. Currently, UUS is used only for few purposes. In the content based access concept, some UUS messages could be used in a proprietary way. A usage of UUS in the circuit switched domain is similar to the usage of Private Extension Fields of GTP-C messages for conveying RAT+MS+SUBS information and NCCRS triggers between the SGSN and the GGSN in the packet switched domain.

An alternative to UUS in the circuit switched domain is to create a new ASE (Application Service Element) User which will communicate between the MSC1 and the MSC2 by means of APM (Application Transport Mechanism) messages including APPs (Application Transport Parameters), and on the DSS.1 interface between the MSC2 and the NAS by means of Facility messages including information elements.

The UUS and the ASE User mechanism, which both require changes into call control protocols, are "hacks" which are appropriate only for intra-PLMN service. A solution independent from the transit networks could be based for example on "call unrelated" signaling paths such that no information is added into existing messages.

The 3G to 2G intersystem handover can be supported for both transparent and non-transparent circuit switched data calls.

The intersystem handover for transparent data calls is supported only if both, GSM and UMTS access, support the same data rate, because in a transparent call the data rate must remain constant. For bit rates higher than 9600 Kbits/s, e.g. 28.8 Kbits/s, the inter-system handover can be supported only if the GSM radio access supports the same data rate via a High Speed Circuit Switched Data (HSCSD) feature.

The intersystem handover for non-transparent data calls can also be supported if the GSM radio access does not support the same data rate. In that case, the data rate shall be downgraded to a level that is supported by the GSM radio access. It should be noted that if the GSM radio access supports HSCSD, then the data rate could also be kept intact.

Since the MSC1 and the SGSN do not know anything about each other's service priority tables, the RNC is the best coordinating point for service based and content based intersystem handover or NCCRS triggers from the MSC and the SGSN, respectively. Service priority tables in the RNC, the SGSN and the MSC have to be configured in this case in a consistent way.

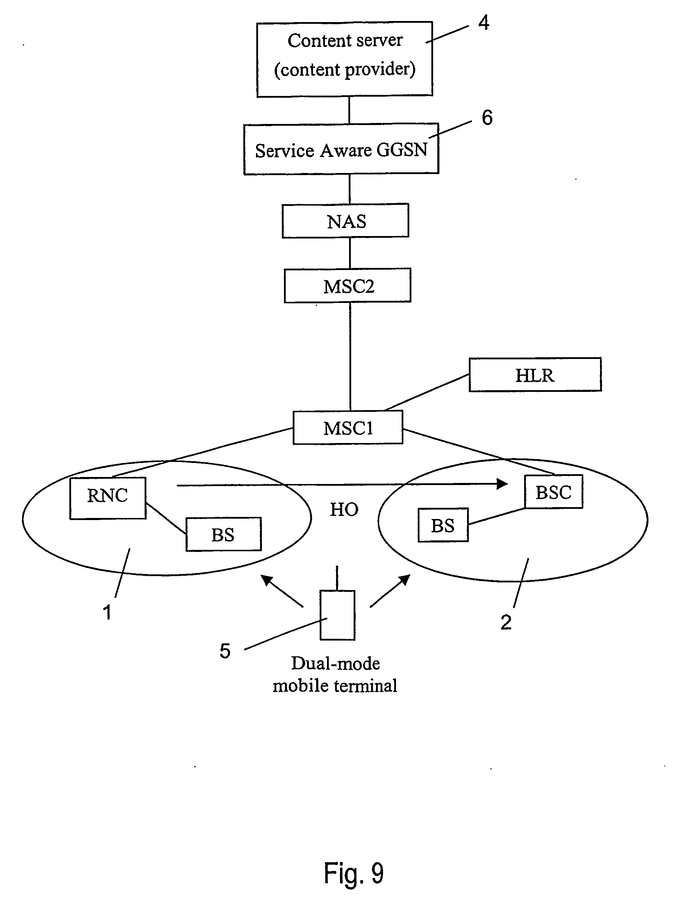

Figure 9 presents a service aware GGSN based communication system in which the described third embodiment of the invention enabling a content-based intersystem handover for a circuit switched communication can be employed analogously as in the communication system of figure 7.

The communication system of figure 9 comprises largely the same units in the same arrangement as the communication system of figure 7, i.e. a 3G UTRAN 1 with a base station BS and a radio network controller RNC, a 2G GSM radio access network 2 with a base station BS and a BSC, a first mobile switching center MSC1, a home location register HLR, a second mobile switching center MSC2, a network access server NAS, a content server 4 of a content provider and a mobile terminal 5.

In the system of figure 9, however, the web switch 3 of the system of figure 7 is replaced by a service-aware GGSN 6. The service aware GGSN 6 stores the list of URLs corresponding to 2G-only content and carries out the functions which were described with reference to figure 8 to be carried out by the web switch 3.

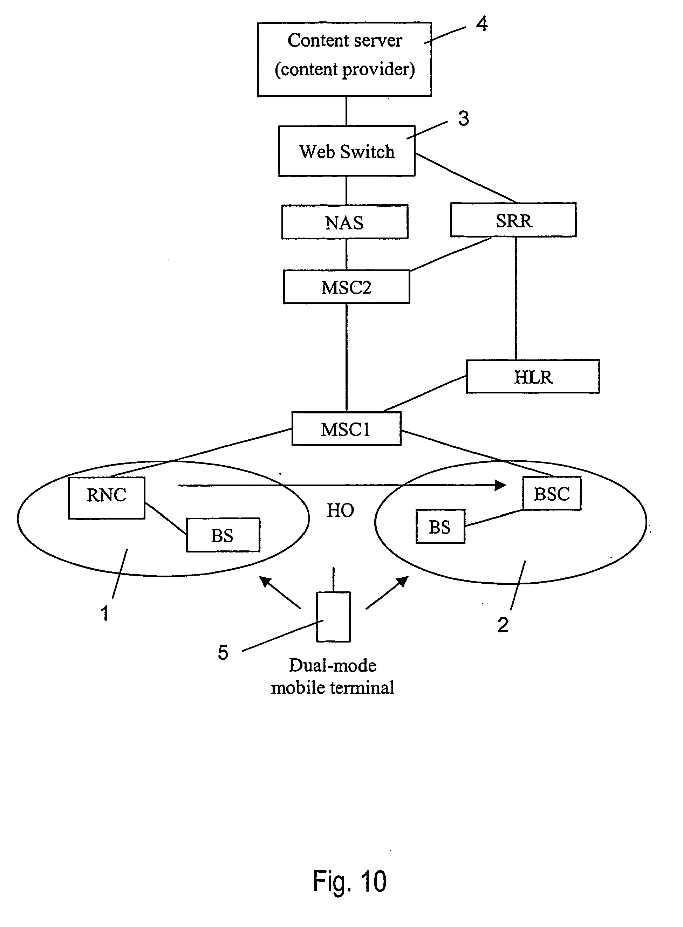

Figure 10 shows a communication system in which a fourth embodiment of the invention enabling a content based intersystem handover for a circuit switched communication can be employed. To those units of figure 10 which correspond to units of figures 1, 6, 7 or 9, the same reference signs were assigned.

The communication system of figure 10 comprises the same units in the same arrangement as the system of figure 7, i.e. the 3G UTRAN 1, the 2G GSM radio access network 2, the first mobile switching center MSC1, the second mobile switching center MSC2, the network access server NAS, the home location register HLR, the web switch 3, the content server 4 and the mobile terminal 5.

In addition, however, a service routing register SRR is provided. The SRR is connected to the HLR, to the second mobile switching center MSC2 and to the web switch 3.

The operator of the communication network has again only a license for providing a specific content via the 2G system, not the 3G system.

As described for the second and the third presented embodiment of the method according to the invention, the content type can be detected in the web switch 3 based on a URL requested by the mobile terminal 5. In this case, however, the necessity of a handover is not determined in the web switch 3 but in the second mobile switching center MSC2.

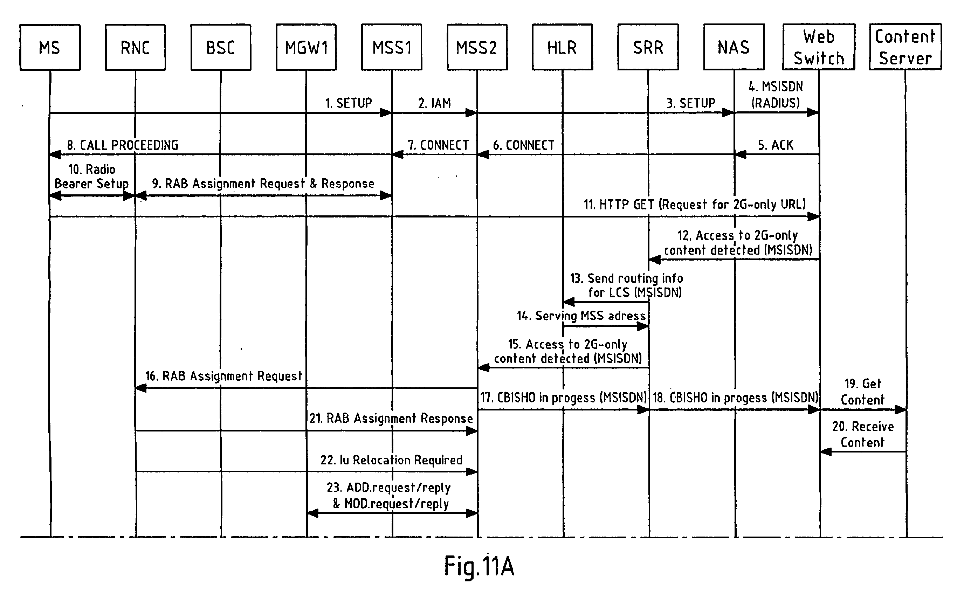

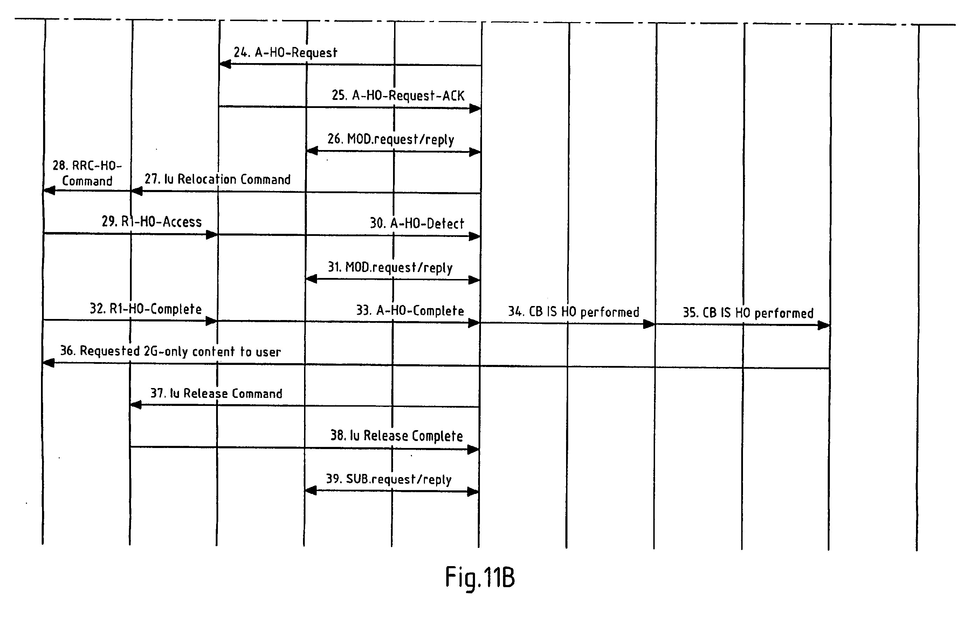

In the following, a content based handover in the communication system of figure 10 will be described with reference to figure 11, which is distributed over two pages as figures 11a and 11b. The mobile station 5 is currently attached to the UTRAN 1 and tries to access a 2G-only content in a circuit switched call.

Figure 11 comprises from left to right a respective vertical line associated to a mobile station MS corresponding to the mobile terminal 5 of figure 10, to the RNC and the BSC of figure 10, to an MGW1 and an MSS1 of the MSC1 of figure 10, to an MSS2 of-the MSC2 of figure 10, and to the HLR, the SRR, the NAS, the web switch 3 and the content server 4 of figure 10. In addition, a respective sequence of messages transmitted between these elements is indicated in the figure by labeled arrows.

In a first message 1, the mobile station MS transmits a SETUP request for a relevant data call to the serving MSS1 for setting up the call.

Thereupon, the MSS1 determines the RAT+MS type of the user and the subscription type information SUBS for this user, as described with reference to figure 8. The radio access type in the current situation is 3G, the mobile station MS is a 2G/3G dual-mode mobile station and the user of mobile station MS subscribed to 2G/3G.

Next, the MSS1 sends the determined information together with the international subscriber call number MSISDN (mobile subscriber integrated services digital network) or the IMSI to the MSS2 in an IAM as message 2. The MSS2 stores the received RAT+MS+SUBS information associated to the MSISDN, or to the IMSI, of the user. Alternatively, the data could be stored in the HLR.

In case the user performs an intra-MSS handover to another radio access (2G or 3G) during the data call, the stored RAT+MS+SUBS information has to be updated by the serving MSS1 accordingly. In case the user performs an inter-MSS handover during the call, the anchor MSS sends the RAT+MS+SUBS information to the new serving MSS which updates the information according to the new radio access and stores it.

The MSS2 then forwards the MSISDN information in a SETUP message 3 to the NAS.

The NAS adds the IP address of the user to the MSIDSN information and transmits the information in an MSISDN (RADIUS) message 4 over the security protocol RADIUS (IP) to the web switch in the beginning of the data call. The web switch stores a mapping between the received MSISDN and the received IP address and confirms reception of the information in message 5.

The NAS transmits a respective CONNECT message 6, 7 to the MSS 2 and further to the MSS1, resulting in a CALL PROCEEDING message 8 from the MSS1 to the mobile station MS. Next, a RAB Assignment Request and Response is exchanged between the MSS1 and the RNC in message exchange 9, and thereafter, a radio bearer is setup by a message exchange 10 between the RNC and the mobile station MS.

The mobile station MS can now transmit in message 11 a HTTP GET request for a 2G-only URL to the web switch.

The web switch detects that the requested URL is present in a stored list of URLs corresponding to 2G-only content. Thereupon, the web switch suspends the HTTP GET request and informs the MSS2 via the SRR that the user associated to the received MSISDN has tried to access 2G-only content. More specifically, the web switch knows the address of the SRR, which is a centralized network element, and transmits a message 12 to the SRR indicating that an access to a 2G-only content by a specific MSISDN was detected. The SRR obtains the E.164 compliant address of the serving MSS2 from the HLR in message exchange 13, 14. The SRR-HLR interface is based on existing MAP (mobile application protocol). Now, the SRR forwards the indication that an access to a 2G-only content by a specific MSISDN was detected in message 15 to the correct MSS2.

The MSS2 analyzes the RAT+MS+SUBS information which is stored in its memory in association to the MSISDN received from the SRR. If the parameters indicate that a content based intersystem handover CBISHO should be performed, as in the current situation, the MSS2 requests the RNC in a "RAB Assignment Request" message 16 to perform a service handover to GSM. The message comprises to this end a service handover IE "Service handover to GSM should be performed".

In addition, the MSS2 sends a corresponding information to the web switch via the SRR in messages 17 and 18. While the content based intersystem handover is progressed, the web switch retrieves the requested content from the content server with a message exchange 19, 20 and stores the content in its cache.

Meanwhile, message 16 triggers a regular service handover. More specifically, the RNC sends an "RAB Assignment Response" message 21 for reserving a circuit and changing the flow direction, and an "Iu Relocation Required" message 22 to the MSS2. After a message exchange 23 between the MSS2 and the MGW1 comprising an "ADD.request/resply & MOD.request/reply", the MSS2 sends an "A-HO Request" in message 24 to the BSC. As only different to a regular service handover, this message comprises a service handover information element "ISHO to UTRAN shall not be performed" for ensuring that an intersystem handover back to 2G will not be performed during the 2G-only content download. Message 24 is acknowledged by the BSC with a message 25 to the MSS2. In the following, the bearer characteristics are modified, if applicable, in a message exchange 26 between the MSS2 and the MGW1. Then, an "Iu Relocation Command" is transmitted by the MSS2 to the RNC in message 27, resulting in an "RRC-HO-Command" in message 28 to the mobile station MS. The mobile station transmits thereupon an "Rl-HO-Access" message 29 to the BSC for accessing the 2G access network, and the BSC transmits an "A-HO-Detect" message 30 to the MSS2. In a further message exchange 31 between the MSS2 and the MGW1, the flow direction is changed.

When the content based intersystem handover has been completed, the mobile station MS sends a corresponding "R1-HO-Complete" message 32 to the BSC, the BSC sends a corresponding "A-HO-Complete" message 33 to the MSS2, the MSS2 sends a corresponding "CB IS HO performed" message 34 to the SRR, and the SRR forwards this message as message 35 to the web switch. Upon receiving the acknowledgment of the handover, the web switch starts a download of the cached 2G-only content to the user in message 36. When the download is completed, an "Iu Release Command" is transmitted by the MSS2 to the RNC in message 37, and the RNC returns an "Iu Release Complete" message 38. The release is then terminated by a message exchange 39 between the MSS2 and the MGW1.

It has to be noted that in an alternative approach, the MSS2 could be able itself to determine the RAT+MS+SUBS information that is to be stored. Further alternatively, instead of the MSS2, the MSS1 could perform the analysis of the stored information upon an indication that an access to a 2G-only content was detected and initiate a handover, if required, similarly as described above for the MSS2. In that case, the MSS1 preferably stores the determined RAT+MS+SUBS information itself or in the HLR.

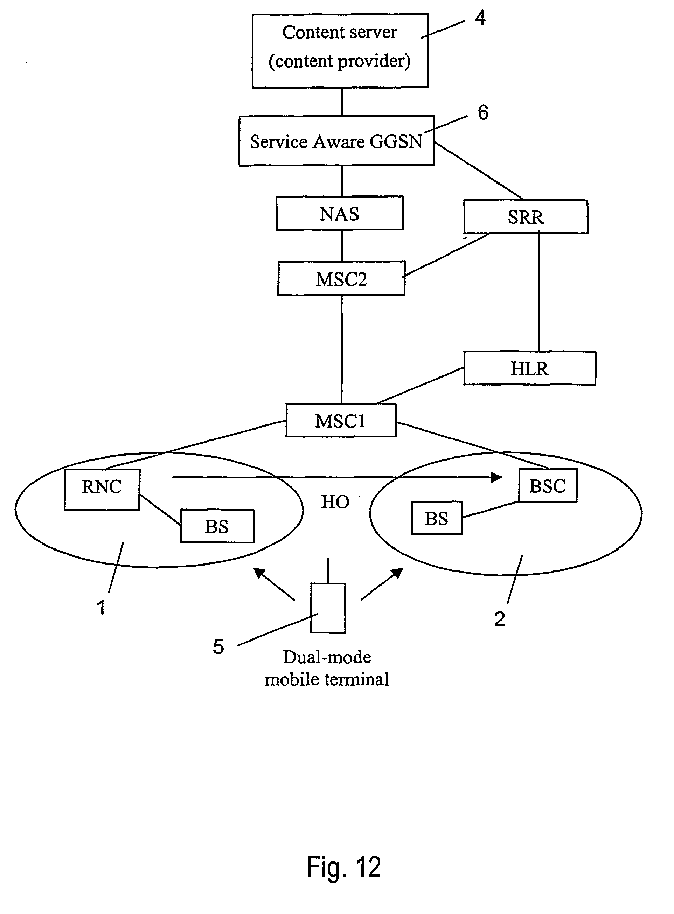

Also the described fourth embodiment of the invention can be employed analogously in a service aware GGSN based communication system. Such a system is depicted in figure 12.

The communication system of figure 12 comprises largely the same units in the same arrangement as the communication system of figure 10, i.e. a 3G UTRAN 1 with a base station BS and a radio network controller RNC, a 2G GSM radio access network 2 with a base station BS and a BSC, a first mobile switching center MSS1, a home location register HLR, a second mobile switching center MSS2, a network access server NAS, a service routing register SRR, a content server 4 of a content provider and a mobile terminal 5.

In the system of figure 12, however, the web switch 3 of the system of figure 10 is replaced by a service aware GGSN 6. The service aware GGSN 6 stores the list of URLs corresponding to 2G-only content and carries out the functions which were described with reference to figure 11 to be carried out by the web switch 3.

It is to be noted that the first described embodiment of the invention using an APN based intersystem handover can also be employed analogously in the communication systems of figures 6, 7, 9, 10 and 12.

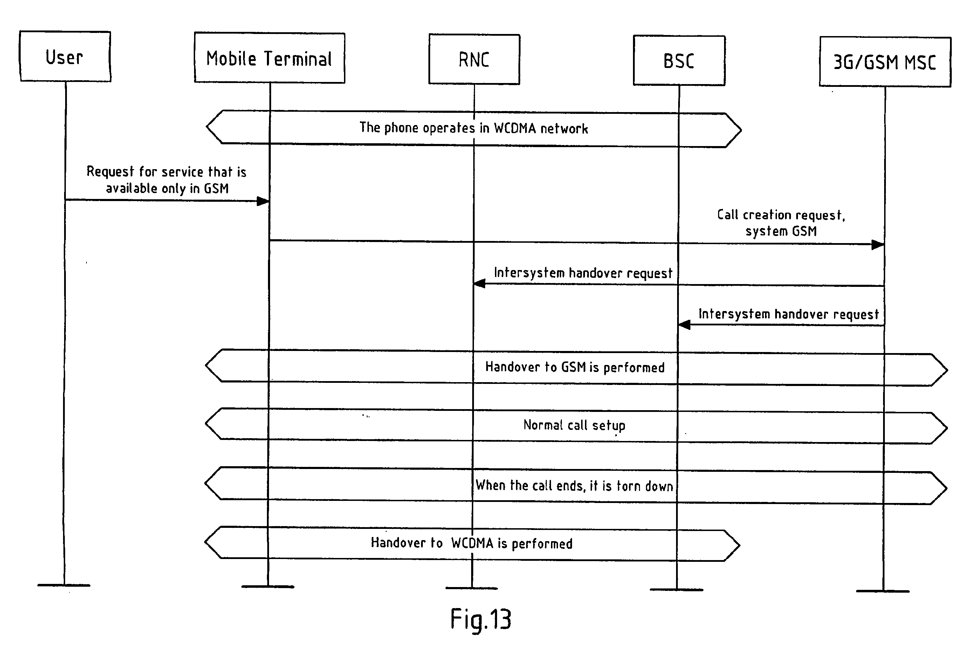

A fifth presented embodiment of the invention is illustrated by the message sequence chart of figure 13. The fifth embodiment enables a service based handover requested by a mobile terminal.

Figure 13 comprises from left to right a respective vertical line associated to a user, to a mobile terminal, to an RNC of an UTRAN of a WCDMA system, to a BSC of a GSM access network, and to a 3G/GSM MSC (mobile switching center) of a core network to which both, RNC and BSC, are connected. Arrows and beams connecting respective vertical lines indicate different actions and procedures in which the user and the network elements are involved. The mobile terminal is registered in the WCDMA system, but is capable of working as well in GSM. The MSC is a switch that serves the mobile terminal in its current location for circuit switched services.

In the initial state in figure 13, the mobile terminal operates in the WCDMA system. Then, the user requests via the mobile terminal a transparent facsimile service that is not available in the WCDMA system but only in the GSM system.

The mobile terminal requests the service from the UMTS system in which it is registered. At the beginning of the message exchange between serving cellular system and the terminal, an information is transmitted that the desired service is requested from another cellular system, i.e. from GSM. More specifically, a call creation request is transmitted by the mobile terminal via the RNC to the 3G/GSM MSC, in which message the desired system is indicated in a new element.

Based on the information provided by the mobile terminal in the beginning of the call setup, the MSC of the serving cellular system initiates an intersystem handover to the preferred system by transmitting an intersystem handover request to the RNC and the BSC. As a result, the handover from WCDMA to GSM is performed. In addition, the service setup request is forwarded to the GSM cellular system.

When the handover is completed, a call setup is performed between the mobile terminal and GSM as in a normal single system case. After the session has been terminated, the call is torn down, and GSM initiates an intersystem handover back to the WCDMA system, if the WCDMA system is still available.

In case the service setup fails in the first intersystem handover, i.e. the handover from the WCDMA system to GSM, the service setup is terminated by the WCDMA system like any service setup in the WCDMA system. In case the service setup fails during the negotiation of the service in GSM, the service setup is terminated by GSM like any service setup carried out in a single system case, and the mobile terminal in handed back to the WCDMA system.

With the approach of the fifth embodiment of the invention, the GSM transparent facsimile service can be used with GSM-WCDMA multi-system terminals throughout a GSM coverage area.

In a fifth embodiment of the invention, an intersystem handover is performed when a specific radio access technology is desired by a mobile terminal for a specific service, because the service works more efficiently or more economically in a system using this radio access technology.

The mobile terminal is a dual-band terminal, which is capable of accessing a communication network via radio access networks using two different technologies. The mobile terminal moreover comprises a memory in which an indication of a preferred radio access technology is stored. This memory is provided either in the mobile equipment or in the SIM (subscriber identity module) or the USIM (UMTS SIM), respectively, of the mobile terminal. The stored preferred radio access technology is further mapped to a specific data rate required for a service. Alternatively, the preferred radio access technology could be mapped to some other characteristics of a service, e.g. to the requested media, i.e. speech, video, data or fax. In addition, the preference may apply only to some types of connections. The mapping ensures that the stored radio access technology is only preferred for selected services, since the preferred radio access technology may only have an advantage for these services.

The mobile terminal further comprises means for signaling a request for a preferred radio access technology to the communication network in an information element added to the current connection establishment signaling. Alternatively, new messages could be added to the signaling sequence.

The communication network comprises means for receiving this request and for taking it into account when deciding about an intersystem handover of the mobile terminal.

In case a mobile terminal desires a specific service, it first checks whether a preferred radio access technology is stored for this service. If a preferred radio access technology is stored for the service, a request for establishing the service is transmitted to the communication network in the connection establishment signaling together with a request for the preferred radio access technology.

The communication network receives this request via the radio access network to which the mobile terminal is currently connected, and in case this radio access network does not employ the requested radio access technology, the communication network checks whether the terminal can be handed over to a cell using the requested technology. The final decision is thus taken by the communication network and depends in addition on other related factors of which the mobile terminal has no knowledge, like the network configuration and the current load situation. If it is possible, the communication network will hand the mobile terminal over to a cell using the preferred radio access technology. Thus, the communication network is able to allocate a cell using the best suited radio access technology as early as possible. Afterwards, the communication network maintains the provided knowledge about the preferred radio access technology in order to enable the mobile terminal to use this technology for the duration of the connection.

## Claims

1. A method for performing an intersystem handover of a mobile terminal (5) accessing a communication network via a radio access network (1) of a first type, wherein said communication network comprises at least said radio access network (1) of said first type and a radio access network (2) of a second type, and wherein said intersystem handover is initiated by a transmission of said mobile terminal (5) to said communication network, which transmission comprises information indicating that an intersystem handover from said radio access network (1) of said first type to said radio access network (2) of said second type should be performed, **characterized in that** the decision to handover is based on said information being either a direct request from the mobile terminal or being information from which the necessity of a handover is derived in the network based on one of a requested content, a requested access point number, a requested uniform resource location (URL) and a requested internet protocol (IP) address.

2. A method according to claim 1, wherein said information indicating that an intersystem handover should be performed is a direct request for a specific type of radio access network (1,2).

3. A method according to claim 2, wherein said mobile terminal (5) stores a list with at least one preferred type of radio access network, from which list said specific type of radio access network is selected.

4. A method according to claim 3, wherein said at least one preferred type of radio access network is assigned to a specific type of content or to specific characteristics of contents, and wherein said specific type of radio access network is selected based on a desired content.

5. A method according to claim 1, wherein said information indicating that an intersystem handover should be performed enables said communication network to derive a type of radio access network to which said mobile terminal (5) should be connected.

6. A method according to claim 5, wherein for deriving said type of radio access network to which said mobile terminal (5) should be connected based on said information indicating that an intersystem handover should be performed, said communication network comprises a network element storing a list with at least one preferred type of radio access network for said mobile terminal.

7. A method according to one of the preceding claims, wherein said information indicating that an intersystem handover should be performed is transmitted in a dedicated information element in a connection establishment signaling.

8. A method according to one of claims 1 to 6, wherein said information indicating that an intersystem handover should be performed is transmitted in a dedicated message of a connection establishment signaling.

9. A method according to one of the preceding claims, wherein said radio access network (1) of said first type is a preferred type of radio access network of said mobile terminal (5) due to a first criterion, and wherein said radio access network (2) of said second type is a preferred type of radio access network of said mobile terminal (5) due to a second criterion.

10. A method according to one of the preceding claims, wherein an intersystem handover is required whenever a requested content is only available from a specific operator via said second type of radio access network.

11. A method according to claim 10, wherein in said mobile terminal (5) different access point names and/or different target internet protocol IP addresses are assigned to different contents, which contents are available via different types of radio access network, and wherein said information indicating that an intersystem handover should be performed comprises the access point name and/or the target IP address assigned to a requested content.

12. A method according to claim 11, wherein said communication network stores a list for said mobile terminal, in which list different access point names and/or different target IP addresses are assigned to a respective type of a radio access network, and wherein said communication network selects a type of radio access network to which a handover is to be performed from said list based on said access point name and/or said target IP address received in said information indicating that an intersystem handover should be performed from said mobile terminal (5).

13. A method according to claim 10, wherein a web switch (3) connecting said communication network with a content server (4) stores a list of uniform resource locations URL for content that is only available via said second type of radio access network, and wherein said web switch (3) triggers a handover, in case said mobile terminal (5) requests a content from said content server (4) by transmitting a URL that is contained in said stored list of URLs.

14. A method according to claim 10, wherein a service aware gateway general packet radio system support node GGSN (6) connecting said communication network with a content server (4) stores a list of uniform resource locations (URL) for content that is only available via said second type of radio access network, and wherein said service aware GGSN (6) triggers a handover, in case said mobile terminal (5) requests a content from said content server (4) by transmitting a URL that is contained in said stored list of URLs.

15. A method according to one of the preceding claims, wherein an intersystem handover should be performed whenever said mobile terminal (5) prefers said second type of radio access network for a specific connection.

16. A method according to claim 15, wherein said information indicating that an intersystem handover should be performed is transmitted by said mobile terminal (5) in a setup message to said communication network.

17. A method according to one of the preceding claims, wherein said communication network grants an intersystem handover initiated by a transmission of said mobile terminal (5) or, in case said intersystem handover is not feasible, blocks a requested call or context activation for which said intersystem handover was initiated.

18. A method according to one of the preceding claims, wherein said communication network triggers a handover with a new information element to said first type radio access network.

19. A method according to one of the preceding claims, wherein said intersystem handover takes place at a call setup.

20. A method according to one of claims 1 to 18, wherein said intersystem handover takes place at a packet data protocol (PDP) context activation.

21. A method according to one of the preceding claims, wherein said intersystem handover is performed in the packet switched domain.

22. A method according to one of claims 1 to 20, wherein said intersystem handover is performed in the circuit switched domain.

23. A mobile terminal (5) comprising means for accessing a communication network via at least two different types of radio access networks, and transmitting means for transmitting a direct request for a specific type of radio access network (1,2) indicating that an intersystem handover from a radio access networks (1) of a first type of said communication network to a radio access network (2) of a second type of said communication network should be performed, **characterized in that** said transmitting means are arranged to transmit said direct request based on one of a requested content, a requested access point number, a requested uniform resource location (URL) and a requested internet protocol (IP) address.

24. A mobile terminal (5) according to claim 23, further comprising storing means for storing a list with at least one preferred type of radio access network, and selection means for selecting from said list one type of radio access network for a desired connection, wherein said transmitting means are configured to transmit said selected type of radio access network as said information indicating that an intersystem handover should be performed.

25. A mobile terminal (5) according to claim 23 or 24, further comprising storing means for storing at least two different access point names and/or at least two different target internet protocol IP addresses associated to at least two different content types, and selection means for selecting an access point name and/or a target IP address associated to a desired content type, wherein said transmitting means are configured to transmit said selected access point name and/or said selected target IP address as said information indicating that an intersystem handover should be performed.

26. A mobile terminal (5) according to one of claims 23 to 25, further comprising a user interface for enabling a user to select one of at least two different access point names and/or one of at least two different target internet protocol IP addresses to be employed for a specific connection, wherein said transmitting means are configured to transmit said selected access point name and/or said selected target IP address as said information indicating that an intersystem handover should be performed.

27. A communication network comprising radio access networks (1,2) of at least two different types and means (RNC,BSC,3G-SGSN,2G-SGSN,MSC1) for performing an intersystem handover of a mobile terminal (5) accessing said communication network via a radio access network (1) of a first type to a radio access network (2) of a second type being triggered upon analysing an information received from said mobile terminal (5) if indicating that an intersystem handover from said radio access network (1) of said first type to a radio access network (2) of said second type should be performed, **characterized in that** the communication network is arranged to derive the necessity of a handover from said information based on one of a requested content, a requested access point number, a requested uniform resource location (URL) and a requested internet protocol (IP) address.

28. A communication network according to claim 27, further comprising storing means (HLR) for storing for a mobile terminal (5) a list with at least one preferred type of radio access network and selection means (3G-SGSN) for selecting from said list one type of radio access network according to information indicating that an intersystem handover should be performed received from said mobile terminal (5), and wherein said means (RNC,BSC,3G-SGSN,2G-SGSN) for performing an intersystem handover are configured to perform said handover in case the mobile terminal (5) is currently accessing said communication network via another type of radio access network than the selected type of radio access network.

29. A communication network according to claim 27 or 28, comprising a core network with a network element (3G-SGSN), which network element (3G-SGSN) comprises means for receiving information indicating that an intersystem handover should be performed from a mobile terminal (5), means for analyzing said information in order to determine a type of radio access network to which said mobile terminal (5) should be connected, and means for triggering an intersystem handover in the radio access network (1) to which the mobile terminal (5) is currently connected.

30. A communication network according to one of claims 27 to 29, wherein at least one radio access network (1) of said communication network comprises means for receiving information from a network element (3G-SGSN) of a core network of said communication network and means (RNC) for performing an intersystem handover to a radio access network (2) of another type of said communication network in response to said information.

31. A communication network according to one of claims 27 to 30, wherein said radio access network (1) of said first type is a 3G, i.e. 3rd generation, radio access network, and wherein said radio access network (2) of said second type is a 2G, i.e. 2nd generation, radio access network.

32. A communication network according to one of claims 27 to 31, wherein said radio access network (1) of said first type is a WCDMA, i.e. wideband code division multiple access, radio access network, and wherein said radio access network (2) of said second type is a GSM, i.e. global system for mobile communications, and/or GPRS, i.e. general packet radio system, radio access network.

33. A network element (3G-SGSN) for a communication network, which network element (3G-SGSN) comprises means for receiving information from a mobile terminal (5) connected via a first type of radio access network to said communication network, means for analyzing said information, and means for triggering an intersystem handover of said mobile terminal (5) in case said analyzed information indicates that an intersystem handover of said mobile terminal (5) to a second type of radio access network should be performed, **characterized in that** said triggering means are arranged to derive the necessity of a handover from said information based on one of a requested content, a requested access point number, a requested uniform resource location (URL) and a requested internet protocol (IP) address.

34. A network element according to claim 33, wherein said network element is a network element (3G-SGSN) of a core network of a cellular network.

35. A network element according to claim 33, wherein said network element is a web switch (3) connecting a communication network and a content server (4).

36. A communication system comprising a communication network with at least two different types of radio access networks and comprising means for receiving a transmission from a mobile terminal (5) and means (RNC,BSC,3G-SGSN,MSC1) for performing an intersystem handover of said mobile terminal (5) from a radio access network (1) of a first type to a radio access network (2) of a second type upon the reception of said transmission, said communication system further comprising at least one mobile terminal (5) with means for accessing said communication network via said radio access network (1) of said first type and said radio access network (2) of said second type and with transmitting means for transmitting an information indicating that an intersystem handover from a radio access networks (1) of a first type of said communication network to a radio access network (2) of a second type of said communication network should be performed, **characterized in that** said means for performing are arranged to base a decision to handover on said information being either a direct request from the mobile terminal or being information from which the necessity of a handover is derived based on one of a requested content, a requested access point number, a requested uniform resource location (URL) and a requested internet protocol (IP) address.

37. A communication system according to claim 36, further comprising a web switch (3) or a service aware gateway general packet radio system support node (GGSN) (6) connecting said communication network with a content server (4), which web switch (3) or GGSN (6) comprises storing means for storing a list of uniform resource locations URL which correspond to content that is only available from said content server (4) via said second radio access technology, means for receiving a request for a URL by said mobile terminal (5) to said content server (4) via said communication network, means for comparing said URL with said stored list of URLs, and means for triggering a handover of said mobile terminal (5) by said communication network in case said mobile terminal (5) is connected to said communication network via said first type of radio access network and in case said URL is an element of said stored list of URLs.

## Patentansprüche

1. Verfahren zur Durchführung einer Weiterreichung zwischen Systemen eines mobilen Endgeräts (5), welches über ein Funkzugangsnetz (1) einer ersten Art auf ein Kommunikationsnetz zugreift, wobei das Kommunikationsnetz zumindest das Funkzugangsnetz (1) der ersten Art und ein Funkzugangsnetz (2) einer zweiten Art umfasst, und wobei die Weiterreichung zwischen Systemen durch eine Übertragung von dem mobilen Endgerät (5) an das Kommunikationsnetz initiiert wird, wobei die Übertragung Informationen umfasst, welche anzeigen, dass eine Weiterreichung zwischen Systemen von dem Funkzugangsnetz (1) der ersten Art auf das Funkzugangsnetz (2) der zweiten Art durchgeführt werden sollte, **dadurch gekennzeichnet, dass** die Entscheidung über die Weiterreichung darauf basiert, dass es sich bei den Informationen entweder um eine direkte Anforderung durch das mobile Endgerät handelt, oder um Informationen, aus denen in dem Netz die Notwendigkeit einer Weiterreichung abgeleitet wird, basierend auf einem angeforderten Inhalt, einer angeforderten Zugangspunktnummer, einer angeforderten URL (Uniform Resource Location) oder einer angeforderten Internetprotokoll(IP)-Adresse.

2. Verfahren nach Anspruch 1, wobei es sich bei den Informationen, welche anzeigen, dass eine Weiterreichung zwischen Systemen durchgeführt werden sollte, um eine direkte Anforderung einer bestimmten Art eines Funkzugangsnetzes (1, 2) handelt.

3. Verfahren nach Anspruch 2, wobei das mobile Endgerät (5) eine Liste mit mindestens einer bevorzugten Art eines Funkzugangsnetzes speichert, aus welcher die bestimmte Art des Funkzugangsnetzes ausgewählt wird.

4. Verfahren nach Anspruch 3, wobei die mindestens eine bevorzugte Art eines Funkzugangsnetzes einer speziellen Inhaltsart oder speziellen Inhaltseigenschaften zugewiesen ist, und wobei die bestimmte Art des Funkzugangsnetzes auf der Grundlage eines gewünschten Inhalts ausgewählt wird.

5. Verfahren nach Anspruch 1, wobei die Informationen, welche anzeigen, dass eine Weiterreichung zwischen Systemen durchgeführt werden sollte, ermöglichen, dass das Kommunikationsnetz eine Art eines Funkzugangsnetzes ableitet, mit welchem das mobile Endgerät (5) verbunden werden soll.

6. Verfahren nach Anspruch 5, wobei zum Ableiten der Art eines Funkzugangsnetzes, mit welchem das mobile Endgerät (5) verbunden werden soll, auf der Grundlage der Informationen, welche anzeigen, dass eine Weiterreichung zwischen Systemen durchgeführt werden sollte, das Kommunikationsnetz ein Netzelement umfasst, welches eine Liste mit mindestens einer bevorzugten Art eines Funkzugangsnetzes für das mobile Endgerät speichert.

7. Verfahren nach einem der vorhergehenden Ansprüche, wobei die Informationen, welche anzeigen, dass eine Weiterreichung zwischen Systemen durchgeführt werden sollte, bei einer Verbindungsaufbau-Signalisierung in einem dedizierten Informationselement übertragen werden.

8. Verfahren nach einem der Ansprüche 1 bis 6, wobei die Informationen, welche anzeigen, dass eine Weiterreichung zwischen Systemen durchgeführt werden sollte, in einer dedizierten Nachricht einer Verbindungsaufbau-Signalisierung übertragen werden.

9. Verfahren nach einem der vorhergehenden Ansprüche, wobei es sich bei dem Funkzugangsnetz (1) der ersten Art um eine bevorzugte Art eines Funkzugangsnetzes des mobilen Endgeräts (5) nach einem ersten Kriterium handelt, und wobei es sich bei dem Funkzugangsnetz (2) der zweiten Art um eine bevorzugte Art eines Funkzugangsnetzes des mobilen Endgeräts (5) nach einem zweiten Kriterium handelt.

10. Verfahren nach einem der vorhergehenden Ansprüche, wobei eine Weiterreichung zwischen Systemen immer dann erforderlich ist, wenn ein angeforderter Inhalt von einem bestimmten Betreiber nur über die zweite Art des Funkzugangsnetzes verfügbar ist.

11. Verfahren nach Anspruch 10, wobei in dem mobilen Endgerät (5) verschiedenen Inhalten verschiedene Zugangspunktnamen und/oder verschiedene Ziel-Internetprotokoll(IP)-Adressen zugewiesen sind, wobei die Inhalte über verschiedene Arten von Funkzugangsnetzen verfügbar sind, und wobei die Informationen, welche anzeigen, dass eine Weiterreichung zwischen Systemen durchgeführt werden sollte, den Zugangspunktnamen und/oder die Ziel-IP-Adresse umfassen, die einem angeforderten Inhalt zugewiesen sind.

12. Verfahren nach Anspruch 11, wobei das Kommunikationsnetz eine Liste für das mobile Endgerät speichert, in welcher verschiedene Zugangspunktnamen und/oder verschiedene Ziel-IP-Adressen einer jeweiligen Art eines Funkzugangsnetzes zugewiesen sind, und wobei das Kommunikationsnetz aus der Liste eine Art eines Funkzugangsnetzes auswählt, zu welchem eine Weiterreichung durchgeführt werden soll, basierend auf dem Zugangspunktnamen und/oder der Ziel-IP-Adresse, der und/oder die in den Informationen von dem mobilen Endgerät (5) empfangen wird/werden, welche anzeigen, dass eine Weiterreichung zwischen Systemen durchgeführt werden sollte.

13. Verfahren nach Anspruch 10, wobei ein Web-Switch (3), welcher das Kommunikationsnetz mit einem Inhaltsserver (4) verbindet, eine Liste von URLs für Inhalte speichert, die nur über die zweite Art eines Funkzugangsnetzes verfügbar sind, und wobei der Web-Switch (3) eine Weiterreichung auslöst, falls das mobile Endgerät (5) einen Inhalt von dem Inhaltsserver (4) durch Übertragen einer URL anfordert, die in der Liste der gespeicherten URLs enthalten ist.

14. Verfahren nach Anspruch 10, wobei ein dienstebewusster GGSN (Gateway General Packet Radio System Support Node) (6), welcher das Kommunikationsnetz mit einem Inhaltsserver (4) verbindet, eine Liste von URLs für Inhalte speichert, die nur über die zweite Art eines Funkzugangsnetzes verfügbar sind, und wobei der dienstebewusste GGSN (6) eine Weiterreichung auslöst, falls das mobile Endgerät (5) einen Inhalt von dem Inhaltsserver (4) durch Übertragen einer URL anfordert, die in der Liste der gespeicherten URLs enthalten ist.

15. Verfahren nach einem der vorhergehenden Ansprüche, wobei eine Weiterreichung zwischen Systemen durchgeführt werden sollte, wenn das mobile Endgerät (5) für eine spezielle Verbindung die zweite Art des Funkzugangsnetzes bevorzugt.

16. Verfahren nach Anspruch 15, wobei die Informationen, welche anzeigen, dass eine Weiterreichung zwischen Systemen durchgeführt werden sollte, von dem mobilen Endgerät (5) in einer Aufbaunachricht an das Kommunikationsnetz übertragen werden.

17. Verfahren nach einem der vorhergehenden Ansprüche, wobei das Kommunikationsnetz eine Weiterreichung zwischen Systemen, welche durch eine Übertragung von dem mobilen Endgerät (5) initiiert wurde, gewährt, oder, falls die Weiterreichung zwischen Systemen nicht durchführbar ist, einen angeforderten Ruf oder eine Kontextaktivierung, für welche(n) die Weiterreichung zwischen Systemen initiiert wurde, blockiert.

18. Verfahren nach einem der vorhergehenden Ansprüche, wobei das Kommunikationsnetz eine Weiterreichung auf das Funkzugangsnetz der ersten Art mittels eines neuen Informationselements auslöst.

19. Verfahren nach einem der vorhergehenden Ansprüche, wobei die Weiterreichung zwischen Systemen bei einem Rufaufbau stattfindet.

20. Verfahren nach einem der Ansprüche 1 bis 18, wobei die Weiterreichung zwischen Systemen bei einer Paketdatenprotokoll(PDP)-Kontextaktivierung stattfindet.

21. Verfahren nach einem der vorhergehenden Ansprüche, wobei die Weiterreichung zwischen Systemen im paketvermittelten Bereich durchgeführt wird.

22. Verfahren nach einem der Ansprüche 1 bis 20, wobei die Weiterreichung zwischen Systemen im leitungsvermittelten Bereich durchgeführt wird.

23. Mobiles Endgerät (5), welches Mittel zum Zugreifen auf ein Kommunikationsnetz über mindestens zwei verschiedene Arten von Funkzugangsnetzen und Sendemittel zum Übertragen einer direkten Anforderung einer bestimmten Art eines Funkzugangsnetzes (1, 2) umfasst, wobei die Anforderung angezeigt, dass eine Weiterreichung zwischen Systemen von einem Funkzugangsnetz (1) einer ersten Art des Kommunikationsnetzes auf ein Funkzugangsnetz (2) einer zweiten Art des Kommunikationsnetzes durchgeführt werden sollte, **dadurch gekennzeichnet, dass** die Sendemittel dazu eingerichtet sind, die direkte Anforderung basierend auf einem angeforderten Inhalt, einer angeforderten Zugangspunktnummer, einer angeforderten URL (Uniform Resource Location) oder einer angeforderten Internetprotokoll(IP)-Adresse zu übertragen.

24. Mobiles Endgerät (5) nach Anspruch 23, welches ferner Speichermittel zum Speichern einer Liste mit mindestens einer bevorzugten Art eines Funkzugangsnetzes und Auswahlmittel zum Auswählen einer Art eines Funkzugangsnetzes für eine gewünschte Verbindung aus der Liste umfasst, wobei die Sendemittel konfiguriert sind, die ausgewählte Art des Funkzugangsnetzes als die Informationen zu übertragen, welche anzeigen, dass eine Weiterreichung zwischen Systemen durchgeführt werden soll.

25. Mobiles Endgerät (5) nach Anspruch 23 oder 24, welches ferner Speichermittel zum Speichern mindestens zweier verschiedener Zugangspunktnamen und/oder mindestens zweier verschiedener Ziel-Internetprotokoll(IP)-Adressen, die zu mindestens zwei verschiedenen Inhaltsarten gehören, und Auswahlmittel zum Auswählen eines Zugangspunktnamens und/oder einer Ziel-IP-Adresse, die zu einer gewünschten Inhaltsart gehört, umfasst, wobei die Sendemittel dafür konfiguriert sind, den ausgewählten Zugangspunktnamen und/oder die ausgewählte Ziel-IP-Adresse als die Informationen zu übertragen, welche anzeigen, dass eine Weiterreichung zwischen Systemen durchgeführt werden soll.

26. Mobiles Endgerät (5) nach einem der Ansprüche 23 bis 25, welches ferner eine Benutzerschnittstelle umfasst, um einem Benutzer zu ermöglichen, einen von mindestens zwei verschiedenen Zugangspunktnamen und/oder eine von mindestens zwei verschiedenen Ziel-Internetprotokoll(IP)-Adressen auszuwählen, welcher und/oder welche für eine spezielle Verbindung verwendet werden soll/sollen, wobei die Sendemittel konfiguriert sind, den ausgewählten Zugangspunktnamen und/oder die ausgewählte Ziel-IP-Adresse als die Informationen zu übertragen, welche anzeigen, dass eine Weiterreichung zwischen Systemen durchgeführt werden soll.

27. Kommunikationsnetz, welches Funkzugangsnetze (1, 2) mindestens zweier verschiedener Arten umfasst, sowie Mittel (RNC, BSC, 3G-SGSN, 2G-SGSN, MSC1) zur Durchführung einer Weiterreichung zwischen Systemen eines mobilen Endgeräts (5), welches über ein Funkzugangsnetz (1) einer ersten Art auf das Kommunikationsnetz zugreift, auf ein Funkzugangsnetz (2) einer zweiten Art, wobei die Weiterreichung auf eine Analyse von Informationen hin ausgelöst wird, die von dem mobilen Endgerät (5) empfangen werden, wenn diese anzeigen, dass eine Weiterreichung zwischen Systemen von dem Funkzugangsnetz (1) der ersten Art auf ein Funkzugangsnetz (2) der zweiten Art durchgeführt werden sollte, **dadurch gekennzeichnet, dass** das Kommunikationsnetz dazu eingerichtet ist, die Notwendigkeit einer Weiterreichung aus den Informationen abzuleiten, basierend auf einem angeforderten Inhalt, einer angeforderten Zugangspunktnummer, einer angeforderten URL (Uniform Resource Location) oder einer angeforderten Internetprotokoll(IP)-Adresse.

28. Kommunikationsnetz nach Anspruch 27, welches ferner Speichermittel (HLR) zum Speichern einer Liste mit mindestens einer bevorzugten Art eines Funkzugangsnetzes für ein mobiles Endgerät (5) umfasst, sowie Auswahlmittel (3G-SGSN), um aus der Liste eine Art eines Funkzugangsnetzes gemäß Informationen auszuwählen, welche anzeigen, dass eine Weiterreichung zwischen Systemen durchgeführt werden sollte, und welche von dem mobilen Endgerät (5) empfangen wurden, und wobei die Mittel (RNC, BSC, 3G-SGSN, 2G-SGSN) zum Durchführen einer Weiterreichung zwischen Systemen dafür konfiguriert sind, die Weiterreichung durchzuführen, falls das mobile Endgerät (5) aktuell über eine andere Art eines Funkzugangsnetzes als die ausgewählte Art des Funkzugangsnetzes auf das Kommunikationsnetz zugreift.

29. Kommunikationsnetz nach Anspruch 27 oder 28, welches ein Kernnetz mit einem Netzelement (3G-SGSN) umfasst, wobei das Netzelement (3G-SGSN) Mittel zum Empfang von Informationen von einem mobilen Endgerät (5), welche anzeigen, dass eine Weiterreichung zwischen Systemen durchgeführt werden sollte, Mittel zum Analysieren der Informationen, um eine Art eines Funkzugangsnetzes zu ermitteln, mit welchem das mobile Endgerät (5) verbunden werden sollte, und Mittel zum Auslösen einer Weiterreichung zwischen Systemen in dem Funkzugangsnetz (1), mit welchem das mobile Endgerät (5) aktuell verbunden ist, umfasst.

30. Kommunikationsnetz nach einem der Ansprüche 27 bis 29, wobei mindestens ein Funkzugangsnetz (1) des Kommunikationsnetzes Mittel zum Empfangen von Informationen von einem Netzelement (3G-SGSN) eines Kernnetzes des Kommunikationsnetzes und Mittel (RNC) zum Durchführen einer Weiterreichung zwischen Systemen auf ein Funkzugangsnetz (2) einer anderen Art des Kommunikationsnetzes in Reaktion auf die Informationen umfasst.

31. Kommunikationsnetz nach einem der Ansprüche 27 bis 30, wobei es sich bei dem Funkzugangsnetz (1) der ersten Art um ein 3G-Funkzugangsnetz (d.h. ein Funkzugangsnetz der dritten Generation) handelt, und wobei es sich bei dem Funkzugangsnetz (2) der zweiten Art um ein 2G-Funkzugangsnetz (d.h. ein Funkzugangsnetz der zweiten Generation) handelt.

32. Kommunikationsnetz nach einem der Ansprüche 27 bis 31, wobei es sich bei dem Funkzugangsnetz (1) der ersten Art um ein WCDMA- (Wideband Code Division Multiple Access) Funkzugangsnetz handelt, und wobei es sich bei dem Funkzugangsnetz (2) der zweiten Art um ein GSM- (Global System for Mobile Communication) und/oder GPRS- (General Packet Radio System) Funkzugangsnetz handelt.

33. Netzelement (3G-SGSN) für ein Kommunikationsnetz, wobei das Netzelement (3G-SGSN) Mittel zum Empfangen von Informationen von einem mobilen Endgerät (5), welches über eine erste Art eines Funkzugangsnetzes mit dem Kommunikationsnetz verbunden ist, Mittel zum Analysieren der Informationen und Mittel zum Auslösen einer Weiterreichung zwischen Systemen des mobilen Endgeräts (5), falls die analysierten Informationen anzeigen, dass eine Weiterreichung zwischen Systemen des mobilen Endgeräts (5) auf eine zweite Art des Funkzugangsnetzes durchgeführt werden sollte, umfasst, **dadurch gekennzeichnet, dass** die Auslösemittel dafür eingerichtet sind, die Notwendigkeit einer Weiterreichung aus den Informationen abzuleiten, basierend auf einem angeforderten Inhalt, einer angeforderten Zugangspunktnummer, einer angeforderten URL (Uniform Resource Location) oder einer angeforderten Internetprotokoll(IP)-Adresse.

34. Netzelement nach Anspruch 33, wobei es sich bei dem Netzelement um ein Netzelement (3G-SGSN) eines Kernnetzes eines Zellularnetzes handelt.

35. Netzelement nach Anspruch 33, wobei es sich bei dem Netzelement um einen Web-Switch (3) handelt, welcher ein Kommunikationsnetz und einen Inhaltsserver (4) verbindet.

36. Kommunikationssystem, welches ein Kommunikationsnetz mit mindestens zwei verschiedenen Arten von Funkzugangsnetzen umfasst und Mittel zum Empfangen einer Übertragung von einem mobilen Endgerät (5) und Mittel (RNC, BSC, 3G-SGSN, MSC1) zum Durchführen einer Weiterreichung zwischen Systemen des mobilen Endgeräts (5) von einem Funkzugangsnetz (1) einer ersten Art auf ein Funkzugangsnetz (2) einer zweiten Art auf Empfang der Übertragung hin umfasst, wobei das Kommunikationssystem ferner mindestens ein mobiles Endgerät (5) mit Mitteln zum Zugreifen auf das Kommunikationsnetz über das Funkzugangsnetz (1) der ersten Art und das Funkzugangsnetz (2) der zweiten Art und mit Sendemitteln zum Übertragen von Informationen umfasst, welche anzeigen, dass eine Weiterreichung zwischen Systemen von einem Funkzugangsnetz (1) einer ersten Art des Kommunikationsnetzes auf ein Funkzugangsnetz (2) einer zweiten Art des Kommunikationsnetzes durchgeführt werden soll, **dadurch gekennzeichnet, dass** die Mittel zum Durchführen der Weiterreichung dafür eingerichtet sind, eine Entscheidung über eine Weiterreichung darauf zu basieren, dass es sich bei den Informationen entweder um eine direkte Anforderung von dem mobilen Endgerät handelt, oder um Informationen, aus welchen die Notwendigkeit einer Weiterreichung abgeleitet wird, basierend auf einem angeforderten Inhalt, einer angeforderten Zugangspunktnummer, einer angeforderten URL (Uniform Resource Location) oder einer angeforderten Internetprotokoll(IP)-Adresse.

37. Kommunikationssystem nach Anspruch 36, welches ferner einen Web-Switch (3) oder einen dienstebewussten GGSN (Gateway General Packet Radio System Support Node) (6) umfasst, welcher das Kommunikationsnetz mit einem Inhaltsserver (4) verbindet, wobei der Web-Switch (3) oder der GGSN (6) Speichermittel umfasst zum Speichern einer Liste von URLs, welche Inhalten entsprechen, die von dem Inhaltsserver (4) nur über die zweite Funkzugangstechnologie verfügbar sind, sowie Mittel zum Empfangen einer Anforderung einer URL durch das mobile Endgerät (5) an den Inhaltsserver (4) über das Kommunikationsnetz, Mittel zum Vergleichen der URL mit der gespeicherten Liste von URLs und Mittel zum Auslösen einer Weiterreichung des mobilen Endgeräts (5) durch das Kommunikationsnetz, falls das mobile Endgerät (5) über die erste Art des Funkzugangsnetzes mit dem Kommunikationsnetz verbunden ist und falls die URL ein Element der gespeicherten Liste von URLs ist.

## Revendications

1. Procédé permettant d'effectuer un transfert intersystème d'un terminal mobile (5) accédant à un réseau de communication par l'intermédiaire d'un réseau d'accès radio (1) d'un premier type,
dans lequel ledit réseau de communication comprend au moins ledit réseau d'accès radio (1) dudit premier type et un réseau d'accès radio (2) d'un second type, et dans lequel ledit transfert intersystème est initié par une transmission dudit terminal mobile (5) audit réseau de communication, laquelle transmission comprend des informations indiquant qu'un transfert intersystème à partir dudit réseau d'accès radio (1) dudit premier type vers ledit réseau d'accès radio (2) dudit second type devrait être effectué, **caractérisé en ce que** la décision de transférer est basée sur lesdites informations étant soit une demande directe venant du terminal mobile soit des informations à partir desquelles la nécessité d'un transfert provient du réseau sur la base d'un élément parmi les éléments suivants : un contenu demandé, un numéro de point d'accès demandé, une adresse universelle (URL - uniform resource location) demandée et une adresse de protocole Internet (IP) demandée.

2. Procédé selon la revendication 1, dans lequel lesdites informations indiquant qu'un transfert intersystème devrait être effectué est une demande directe pour un type spécifique de réseau d'accès radio (1, 2).

3. Procédé selon la revendication 2, dans lequel ledit terminal mobile (5) stocke une liste avec au moins un type préféré de réseau d'accès radio, liste à partir de laquelle ledit type spécifique de réseau d'accès radio est sélectionné.

4. Procédé selon la revendication 3, dans lequel ledit au moins un type préféré de réseau d'accès radio est assigné à un type spécifique de contenu ou à des caractéristiques spécifiques de contenus, et dans lequel ledit type spécifique de réseau d'accès radio est sélectionné sur la base d'un contenu désiré.

5. Procédé selon la revendication 1, dans lequel lesdites informations indiquant qu'un transfert intersystème devrait être effectué permettent audit réseau de communication de trouver un type de réseau d'accès radio auquel ledit terminal mobile (5) devrait être connecté.

6. Procédé selon la revendication 5, dans lequel, pour trouver ledit type réseau d'accès radio auquel ledit terminal mobile (5) devrait être connecté sur la base desdites informations indiquant qu'un transfert intersystème devrait être effectué, ledit réseau de communication comprend un élément de réseau stockant une liste avec au moins un type préféré de réseau d'accès radio pour ledit terminal mobile.

7. Procédé selon l'une des revendications précédentes, dans lequel lesdites informations indiquant qu'un transfert intersystème devrait être effectué sont transmises dans un élément d'information dédié dans un signalisation d'établissement de connexion.

8. Procédé selon l'une des revendications 1 à 6, dans lequel lesdites informations indiquant qu'un transfert intersystème devrait être effectué sont transmises dans un message dédié d'une signalisation d'établissement de connexion.

9. Procédé selon l'une des revendications précédentes, dans lequel ledit réseau d'accès radio (1) dudit premier type est un type préféré de réseau d'accès radio dudit terminal mobile (5) en raison d'un premier critère, et dans lequel ledit réseau d'accès radio (2) dudit second type est un type préféré de réseau d'accès radio dudit terminal mobile (5) en raison d'un second critère.

10. Procédé selon l'une des revendications précédentes, dans lequel un transfert intersystème est demandé chaque fois qu'un contenu demandé est disponible seulement à partir d'un opérateur spécifique via ledit second type de réseau d'accès radio.

11. Procédé selon la revendication 10, dans lequel dans ledit terminal mobile (5) différents noms de points d'accès et/ou différentes adresses de protocole Internet (IP) cible sont assignés à différents contenus, lesquels contenus sont disponibles par l'intermédiaire de différents types de réseau d'accès radio, et dans lequel lesdites informations indiquant qu'un transfert intersystème devrait être effectué comprennent le nom du point d'accès et/ou l'adresse IP cible assigné à un contenu demandé.

12. Procédé selon la revendication 11, dans lequel ledit réseau de communication stocke une liste pour ledit terminal mobile, liste dans laquelle différents noms de points d'accès et ou différentes adresses de protocole Internet (IP) cible sont assignés à un type respectif de réseau d'accès radio, et dans lequel ledit réseau de communication sélectionne un type de réseau d'accès radio vers lequel un transfert doit être effectué à partir de ladite liste sur la base dudit nom de point d'accès et/ou ladite adresse IP cible reçue dans lesdites informations indiquant qu'un transfert intersystème devrait être effectué à partir dudit terminal mobile (5).

13. Procédé selon la revendication 10, dans lequel un commutateur web (3) connectant ledit réseau de communication avec un serveur de contenu (4) stocke une liste d'adresses universelles URL pour du contenu qui est disponible uniquement par l'intermédiaire dudit second type de réseau d'accès radio, et dans lequel ledit commutateur web (3) déclenche un transfert, dans le cas où ledit terminal mobile (5) demande un contenu provenant dudit serveur de contenu (4) en transmettant une URL qui est contenue dans ladite liste d'URL stockée.

14. Procédé selon la revendication 10, dans lequel un noeud passerelle de support de système général de transmission de données par paquets GGSN (6) au courant d'un service connectant ledit réseau de communication avec un serveur de contenu (4) stocke une liste d'adresses universelles (URL) pour du contenu qui est disponible uniquement par l'intermédiaire dudit second type de réseau d'accès radio, et dans lequel ledit GGSN (6) au courant d'un service déclenche un transfert, dans le cas où ledit terminal mobile (5) demande un contenu provenant dudit serveur de contenu (4) en transmettant une URL qui est contenue dans ladite liste d'URL stockée.

15. Procédé selon l'une des revendications précédentes, dans lequel un transfert intersystème devrait être effectué chaque fois que ledit terminal mobile (5) préfère ledit second type de réseau d'accès radio pour une connexion spécifique.

16. Procédé selon la revendication 15, dans lequel lesdites informations indiquant qu'un transfert intersystème devrait être effectué sont transmises par ledit terminal mobile (5) dans un message d'établissement de communication audit réseau de communication.

17. Procédé selon l'une des revendications précédentes, dans lequel ledit réseau de communication accorde un transfert intersystème initié par une transmission dudit terminal mobile (5) ou, dans le cas où ledit transfert intersystème n'est pas possible, bloque un appel demandé ou une activation de contexte pour lesquels ledit transfert intersystème était initialisé.

18. Procédé selon l'une des revendications précédentes, dans lequel ledit réseau de communication déclenche un transfert avec un nouvel élément d'information vers ledit premier type de réseau d'accès radio.

19. Procédé selon l'une des revendications précédentes, dans lequel ledit transfert intersystème a lieu au moment de l'établissement d'une communication d'appel.

20. Procédé selon l'une des revendications 1 à 18, dans lequel ledit transfert intersystème a lieu au moment d'une activation de contexte de protocole de données par paquets (PDP).

21. Procédé selon l'une des revendications précédentes, dans lequel ledit transfert intersystème est effectué dans le domaine à commutation de paquets.

22. Procédé selon l'une des revendications 1 à 20, dans lequel ledit transfert intersystème est effectué dans le domaine à commutation de circuits.

23. Terminal mobile (5) comprenant des moyens pour accéder à un réseau de communication par l'intermédiaire d'au moins deux types différents de réseaux d'accès radio, et des moyens permettant de transmettre une demande directe pour un type spécifique de réseau d'accès radio (1, 2) indiquant qu'un transfert intersystème à partir d'un réseau d'accès radio (1) d'un premier type dudit réseau de communication vers un réseau d'accès radio (2) d'un second type dudit réseau de communication devrait être effectué, **caractérisé en ce que** lesdits moyens de transmission sont agencés pour permettre ladite demande directe sur la base d'un élément parmi les éléments suivant : un contenu demandé, un numéro de points d'accès demandé, une adresse universelle (URL) demandée et une adresse de protocole Internet (IP) demandée.

24. Terminal mobile (5) selon la revendication 23, comprenant en outre des moyens de stockage pour stocker une liste avec au moins un type préféré de réseau d'accès radio, et des moyens de sélection pour sélectionner à partir de ladite liste un type de réseau d'accès radio pour une connexion désirée, dans lequel lesdits moyens de transmission sont configurés pour transmettre ledit type de réseau d'accès radio sélectionné comme lesdites informations indiquant qu'un transfert intersystème devrait être effectué.

25. Terminal mobile (5) selon la revendication 23 ou 24, comprenant en outre des moyens de stockage pour stocker au moins deux noms de point d'accès différents et/ou au moins deux adresses de protocole Internet IP cibles associés à au moins deux types de contenu, et des moyens de sélection pour sélectionner un nom de point d'accès et/ou une adresse IP cible associés à un type de contenu désiré, dans lequel lesdits moyens de transmission sont configurés pour transmettre ledit nom de point d'accès sélectionné et/ou ladite adresse IP cible sélectionnée comme lesdites informations indiquant qu'un transfert intersystème devrait être effectué.

26. Terminal mobile (5) selon l'une des revendications 23 à 25, comprenant en outre une interface utilisateur pour permettre à un utilisateur de sélectionner un nom de point d'accès parmi au moins deux noms de point d'accès différents et/ou une adresse de protocole Internet IP cible parmi au moins deux adresses de protocole Internet IP cibles différentes pour être employée pour une connexion spécifique, dans lequel lesdits moyens de transmission sont configurés pour transmettre lesdits noms de point d'accès sélectionnés et/ou lesdites adresses IP cibles sélectionnées comme lesdites informations indiquant qu'un transfert intersystème devrait être effectué.

27. Réseau de communication comprenant des réseaux d'accès radio (1, 2) d'au moins deux types différents et des moyens (RNC, BSC, 3G-SGSN, 2G-SGSN, MSC1) pour effectuer un transfert intersystème d'un terminal mobile (5) accédant audit réseau de communication par l'intermédiaire d'un réseau d'accès radio (1) d'un premier type vers un réseau d'accès radio (2) d'un second type étant déclenché sur analyse d'une information reçue dudit terminal mobile (5) s'il y a indication qu'un transfert intersystème provenant dudit réseau d'accès radio (1) dudit premier type vers un réseau d'accès radio (2) dudit second type devrait être effectué, **caractérisé en ce que** le réseau de communication est agencé pour puisée la nécessité d'un transfert à partir desdites informations sur la base d'un élément parmi lés éléments suivants : un contenu demandé, un numéro de points d'accès demandé, une adresse universelle (URL) demandée et une adresse de protocole Internet (IP) demandée.

28. Réseau de communication selon la revendication 27, comprenant en outre des moyens de stockage (HLR) permettant de stocker pour un terminal mobile (5) une liste avec au moins un type de réseau d'accès radio préféré et des moyens de sélection (3G-SGSN) pour sélectionner à partir de ladite liste un type de réseau d'accès radio conformément aux informations indiquant qu'un transfert intersystème devrait être effectué reçues dudit terminal mobile (5), et dans lequel lesdits moyens (RNC, BSC, 3G-SGSN, 2G-SGSN) pour effectuer un transfert intersystème sont configurés pour effectuer ledit transfert dans le cas où le terminal mobile (5) est en train d'accéder audit réseau de communication par l'intermédiaire d'un autre type de réseau d'accès radio que le type de réseau d'accès radio sélectionné.

29. Réseau de communication selon la revendication 27 ou 28, comprenant un réseau d'infrastructure avec un élément de réseau (3G-SGSN), lequel élément de réseau (3G-SGSN) comprend des moyens pour recevoir des informations indiquant qu'un transfert intersystème devrait être effectué dudit terminal mobile (5), des moyens pour analyser lesdites information afin de déterminer un type de réseau d'accès radio auquel ledit terminal mobile (5) devrait être connecté, et des moyens pour déclencher un transfert intersystème dans le réseau d'accès radio (1) auquel le terminal mobile (5) est actuellement connecté.

30. Réseau de communication selon l'une des revendications 27 à 29, dans lequel au moins un réseau d'accès radio (1) dudit réseau de communication comprend des moyens pour recevoir des informations provenant d'un élément de réseau (3G-SGSN) d'un réseau d'infrastructure dudit réseau de communication et des moyens (RNC) pour effectuer un transfert intersystème vers un réseau d'accès radio (2) d'un autre type dudit réseau de communication en réponse auxdites informations.

31. Réseau de communication selon l'une des revendications 27 à 30, dans lequel ledit réseau d'accès radio (1) dudit premier type est un réseau d'accès radio 3G, c'est-à-dire de troisième génération, et dans lequel ledit réseau d'accès radio (2) dudit second type est un réseau d'accès radio 2G, c'est-à-dire de deuxième génération.

32. Réseau de communication selon l'une des revendications 27 à 31, dans lequel ledit réseau d'accès radio (1) dudit premier type est un réseau d'accès radio WCDMA (wideband code division multiple access), c'est-à-dire accès multiple par répartition en code large bande, et dans lequel ledit réseau d'accès radio (2) dudit second type est un réseau d'accès radio GSM (global système for mobile communications), c'est-à-dire système global de communication mobile et/ou GPRS (général packet radio system) c'est-à-dire système général de transmission des données par paquets.

33. Elément de réseau (3G-SGSN) pour un réseau de communication, lequel élément de réseau (3G-SGSN) comprend des moyens pour recevoir des informations provenant d'un terminal mobile (5) connecté par l'intermédiaire d'un premier type de réseau d'accès radio audit réseau de communication, des moyens pour analyser lesdites informations, des moyens pour déclencher un transfert intersystème dudit terminal mobile (5) dans le cas où lesdites informations analysées indiquent qu'un transfert intersystème dudit terminal mobile (5) vers un second type de réseau d'accès radio devrait être effectué, **caractérisé en ce que** lesdits moyens de déclenchement sont agencés pour puiser la nécessité d'un transfert à partir desdites informations sur la base d'un élément parmi les éléments suivant : un contenu demandé, un numéro de points d'accès demandé, une adresse universelle (URL) demandée et une adresse de protocole Internet (IP) demandée.

34. Elément de réseau selon la revendication 33, dans lequel ledit élément de réseau est un élément de réseau (3G-SGSN) d'un réseau d'infrastructure d'un réseau cellulaire.

35. Elément de réseau selon la revendication 33, dans lequel ledit élément de réseau est un commutateur web (3) connectant un réseau de communication et un serveur de contenu (4).

36. Système de communication comprenant un réseau de communication avec au moins deux types de réseau d'accès radio différents et comprenant des moyens permettant de recevoir une transmission provenant d'un terminal mobile (5) et des moyens (RNC, BSC, 3G-SGSN, MSC1) pour effectuer un transfert intersystème dudit terminal mobile (5) dudit réseau d'accès radio (1) d'un premier type vers un réseau d'accès radio (2) d'un second type sur réception de ladite transmission, ledit système de communication comprenant en outre au moins un terminal mobile (5) avec des moyens pour accéder audit réseau de communication par l'intermédiaire d'un réseau d'accès radio (1) dudit premier type et ledit réseau d'accès radio (2) dudit second type et avec des moyens de transmission pour transmettre une information indiquant qu' un transfert intersystème d'un réseau d'accès radio (1) d'un premier type dudit réseau de communication vers un réseau d'accès radio (2) d'un second type dudit réseau de communication devrait être effectué, **caractérisé en ce que** lesdits moyens pour effectuer sont agencés pour fonder une décision de transfert sur ladite information étant soit une demande directe provenant d'un terminal mobile soit des informations à partir desquelles la nécessité d'un transfert est puisée sur la base d'un élément parmi les éléments suivant : un contenu demandé, un numéro de points d'accès demandé, une adresse universelle (URL) demandée et une adresse de protocole Internet (IP) demandée.

37. Système de communication selon la revendication 36, comprenant en outre, un commutateur web (3) ou un noeud passerelle de support de système général de transmission de données par paquets GGSN (6) au courant d'un service connectant ledit réseau de communication avec un serveur de contenu (4), lequel commutateur web (3) ou GGSN (6) comprend des moyens de stockage pour stocker une liste d'adresses universelles URL qui correspondent à un contenu qui est disponible uniquement à partir dudit serveur de contenu (4) par l'intermédiaire de ladite seconde technologie d'accès radio, des moyens pour recevoir une demande pour une URL par ledit terminal mobile (5) audit serveur de contenu (4) par l'intermédiaire dudit réseau de communication, des moyens pour comparer ladite URL à ladite liste d'URL stockée, et des moyens pour déclencher un transfert dudit terminal mobile (5) par ledit réseau de communication dans le cas où ledit terminal mobile (5) est connecté audit réseau de communication par l'intermédiaire dudit premier type de réseau d'accès radio et dans le cas où ladite URL est un élément de ladite liste D'URL stockée.
